# EUROPEAN PATENT SPECIFICATION

(11) **EP 3 707 198 B1**
(45) Date of publication and mention of the grant of the patent: **27.10.2021**
(21) Application number: 17805338.5
(22) Date of filing: 06.11.2017
(51) Int. Cl.: C08K 3/04, C08K 3/08, C08K 3/22, C08K 5/18, C08K 5/3437, C08K 5/3475, C08K 5/3492

(54) **PLASTIC FILMS WITH REDUCED UV ACTIVITY**
KUNSTSTOFFFOLIEN MIT VERMINDERTER UV-AKTIVITÄT
FILMS PLASTIQUES À ACTIVITÉ UV RÉDUITE

(43) Date of publication of application: 16.09.2020
(73) Proprietor: Covestro Deutschland AG, 51373 Leverkusen (DE); Covestro LLC, Pittsburgh, PA 15205 (US)
(72) Inventor: PUDLEINER, Heinz, 47800 Krefeld (DE); TZIOVARAS, Georgios, 41464 Neuss (DE); MEYER, Klaus, 41539 Dormagen (DE); PLANKEN, Kira, 47574 Goch (DE); JANKE, Stefan, 41379 Brueggen (DE); COOPER, Christopher, East Lyme, Connecticut 06333 (US)
(74) Representative: Levpat
(86) International application number: PCT/US2017/060106
(87) International publication number: WO 2019/089048

(56) References cited:
- US-A1- 2012 231 240
- US-B2- 8 778 494

## Description

The present invention relates to a plastic film having reduced UV activity, to particular embodiments of such plastic films in the form of coextruded films, layer constructions comprising the plastic film according to the invention, and to security documents, preferably identification documents, comprising such plastic films.

It is known that plastic films and/or layer constructions on the basis of polycarbonate have a certain fluorescence due to the thermoplastic production process of the polycarbonate raw material of these plastic films and/or layer constructions through lamination. This so-called background fluorescence can in particular be of disadvantage with security documents, and very particularly with identification documents.

This background fluorescence can be reduced to a minimum through the addition of stabilising agents such as for example triphenylphosphine derivatives. However, some interfering fluorescence can still be observed despite adding these stabilising agents, which can be of disadvantage within the area of security documents, and in particular within the area of identification documents. The fluorescence of the substrate film can be of particular disadvantage during the printing of UV active security features, as it leads to a reduction in the contrast of the printed image and therefore to a reduction in the recognisability of the printed element, i.e. the security feature.

Also due to fluorescence, plastic films and/or layer constructions based on polycarbonate display so-called edge shine. This means that the fluorescence at the edges is reflected through total reflection on the edge surface, in particular when looking at the edges of a layer compound, and transmitted (also called light guiding or light piping) and the edge shine created in this way. This also has a disadvantageous effect when using such plastic films and/or layer constructions within the area of security documents, and in particular within the area of identification documents.

Inscribing plastic films by means of laser engraving is also an important step in the production of film composites. Such film composites play a large part, for example for security documents, in particular identification documents such as passports, passes, ID cards or credit cards. The black-and-white personalisation of cards by means of laser engraving, that is to say the application of lettering or images such as black-and-white photographs, is generally known. Personalisation by means of laser engraving is generally distinguished in particular by its high security against forgery. The (text) image is formed on the inside of the card, so that it is not possible to remove the (text) image and produce a new (text) image. Separation of the cards into their individual layers in order to reach the laser layer is not possible, for example, in the case of cards made completely of polycarbonate.

A requirement for plastic films on the basis of polycarbonate that have very low background fluorescence and where the quality of the films is not negatively affected therefore existed. It should also still be possible to print these plastic films by means of laser engraving without negative effect.

It is therefore the task of the invention to provide a plastic film that has low fluorescence, i.e. that has low radiation of a wavelength range of between 400 and 800 nm when excited within a UV wavelength range of between 254 nm and 365 nm, and is suitable for the production of security documents, in particular identification documents, and that can still be printed by means of laser engraving without negatively affecting quality. US 2012/231240 A1 discloses (example 1) a laser additive dispersion comprising carbon black and polycarbonate polymer. This dispersion was used to prepare security films for documents. Surprisingly it has been found that a plastic film comprising at least one layer containing a thermoplastic plastic, characterised in that this layer comprises at least one pigment and/or a pigment mixture, a metal powder, an alloy and/or metal oxides of the same, wherein the metals of the group of non-ferrous metals are excepted, and/or a UV absorber, overcomes the above mentioned disadvantages and has a low fluorcsccncc, namely low UV activity.

The object of the present invention is therefore a plastic film comprising at least one layer containing at least one thermoplastic plastic, characterised in that this layer comprises at least one component:
component a)
   a1) a pigment and/or a pigment mixture, preferably a2) a pigment and/or pigment mixture from the group of soluble pigments, preferably a3) a soluble pigment mixture, the concentration and mixture ratio of which are adjusted in such a way that a light transmission of ≤ 55% is achieved for a film thickness of 500 µm over the entire spectral range between 400 nm and 650 nm, most preferably a4) a pigment mixture of Solvent Orange 60, Solvent Red 52, Solvent Green 3 and/or Solvent Blue 97 according to classification of CI, the concentration and mixture ratio of which is adjusted in such a way that a light transmission of ≤ 55% is achieved for a film thickness of 500 µm over the entire spectral range between 400 nm and 650 nm,
component b)
   b1) metal powder, its alloy and/or metal oxides, wherein the metals of the group of non-ferrous metals are excluded, preferably b2) metal powder, its alloys and/or metal oxides from the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium, more preferably b3) metal powder, its alloys and/or metal oxides from the group consisting of Tungsten, iron, nickel, titanium and cobalt, and
component c)
   c1) UV absorbers with an absorption effect within a range of 220 nm to 400 nm, preferably within a range of 240 nm to 390 nm, preferably c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles.

The individual components a) to c) can be contained in the plastic film individually or together in the following quantity ranges:
component a) in a quantity of 0.001 to 0.01 wt.%, preferably of 0.002 to 0.008 wt.%,
more preferably of 0.0025 to 0.006 wt.%,
component b) in a quantity of ≥ 0.002 wt.% to ≤ 0.03 wt.%, preferably of ≥ 0.004 wt.% to ≤ 0.02 wt.%, more preferably of ≥ 0.0045 wt.% to ≤ 0.015 wt.%, and
component c) in a quantity of 0.20 wt.% to 0.80 wt.%, preferably of 0.25 wt.% to 0.75 wt.%, more preferably of 0.30 wt.% to 0.70 wt.%,
wherein all quantity information relates to the total film.

The terms plastic film and film are used interchangeably as part of the present invention. Individual components will now be described in more detail below.

### Component a)

In principle all possible pigments and/or pigment mixtures (a1) can be contained in the films according to the invention. Pigments and/or pigment mixtures from the group of soluble pigments (a2) are advantageously used. When using the film according to the invention within the area of security documents, in particular identification documents, it is desirable that the films are colourless where possible. With one particularly preferred embodiment of the invention a soluble pigment mixture is used as component a), the concentration and mixture ratio of which is adjusted in such a way that a light transmission of ≤ 55% is achieved for a film thickness of 500 µm within the entire spectral range between 400 nm and 650 nm (a3). In a most preferable embodiment of the invention a soluble pigment mixture of Solvent Orange 60, Solvent Red 52, Solvent Green 3 and/or Solvent Blue 97 according to classification of CI is used, the concentration and mixture ratio of which is adjusted in such a way that a light transmission of ≤ 55% is achieved for a film thickness of 500 µm within the entire spectral range between 400 nm and 650 nm (a4). The quantity of component a) used in the film according to the invention lies within a range of 0.001 to 0.01 wt.%, preferably of 0.002 to 0.008 wt.%, more preferably of 0.0025 to 0.006 wt.%, wherein this quantity information relates to the total film. Suitable soluble pigments according to the invention are for example commercially available under the tradename Macrolex™ from Lanxess Deutschland AG.

Soluble pigments are those that are classified as such according to the Colour Index (CI) published by the British Society of Dyers and Colourists and the American Association of Textile Chemists and Colorists.

### Component b)

In principle metal powder, its alloy and/or metal oxide of all metals can be used as component b), wherein metals from the group of non-ferrous metals are excluded (b1). These are preferably metal powder, its alloys and/or metal oxides from the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium (b2), more preferably metal powder, its alloys and/or metal oxides from the group consisting of Tungsten, iron, nickel, titanium and cobalt (b3). Component b) can be contained in the film according to the invention in a quantity of ≥ 0.002 wt.% to ≤ 0.03 wt.%, preferably of ≥ 0.004 wt.% to ≤ 0.02 wt.%, more preferably of ≥ 0.045 wt.% to ≤ 0.015 wt.%, wherein this information relates to the total film.

In one advantageous embodiment component b) has a particle size of ≥ 0.05 µm to ≤ 50 µm, preferably of ≥ 0.1 µm to ≤ 40 µm, more preferably of ≥ 0.5 µm to ≤ 30 µm.

### Component c)

In principle all UV absorbers that have an excellent absorption effect within a range of 220 to 400 nm, preferably within a range of 240 nm to 390 nm, can be used as component c) (c1). These for example include UV absorbers based on chromophores of the class of triazines, benzotriazoles, benzophenols, benzylidenmalonates and/or cyanoacrylates, preferably based on chromophores of the class of triazines, benzylidenmalonates and/or benzotriazoles, and more preferably on chromophores of the class of triazines and/or benzylidenmalonates. Chromophores of the class of triazines for example include hydroxy-phenyl-triazines or biphenyl substituted triazines. These are commercially available under the trade names Tinuvin™ or Hostavin™ B-CAP.

Chromophores of the class of cyanoacrylates for example include diphenylcyanoacrylates. These are commercially available under the trade names Uvinul™ 3030 or Uvinul™ 3035.

Component c) can be contained in the film according to the invention in a quantity of 0.20 wt.% to 0.80 wt.%, preferably of 0.25 wt.% to 0.75 wt.%, more preferably of 0.30 wt.% to 0.70 wt.%, wherein this information relates to the total film.

Components a) to c) can be contained on their own or in an mixture with each other in the plastic film according to the invention. Should mixtures of components a) to c) be contained in the plastic film according to the invention, then quantity information of the individual components a) to c) can lie within the above mentioned ranges.

In another embodiment of the invention the plastic film comprises at least one layer comprising at least one thermoplastic plastic, wherein this layer contains at least one component a1), b1) and/or c1).

In a further embodiment of the invention the plastic film comprises at least one layer containing at least one thermoplastic plastic, wherein this layer contains at least one component a1), b2) and/or c2).

In another embodiment of the invention the plastic film comprises at least one layer containing at least one thermoplastic plastic, wherein this layer contains at least one component a1), b3) and/or c3).

In another embodiment of the invention the plastic film comprises at least one layer containing at least one thermoplastic plastic, wherein this layer contains at least one component a2), b1) and/or c1).

In a further embodiment of the invention the plastic film comprises at least one layer containing at least one thermoplastic plastic, wherein this layer contains at least one component a2), b2) and/or c2).

In another embodiment of the invention the plastic film comprises at least one layer containing at least one thermoplastic plastic, wherein this layer contains at least one component a2), b3) and/or c3).

In another embodiment of the invention the plastic film comprises at least one layer containing at least one thermoplastic plastic, wherein this layer contains at least one component a3), b1) and/or c1).

In a further embodiment of the invention the plastic film comprises at least one layer containing at least one thermoplastic plastic, wherein this layer contains at least one component a3), b2) and/or c2).

In another embodiment of the invention the plastic film comprises at least one layer containing at least one thermoplastic plastic, wherein this layer contains at least one component a3), b3) and/or c3).

In another embodiment of the invention the plastic film comprises at least one layer containing at least one thermoplastic plastic, wherein this layer contains at least one component a4), b1) and/or c1).

In a further embodiment of the invention the plastic film comprises at least one layer containing at least one thermoplastic plastic, wherein this layer contains at least one component a4), b2) and/or c2).

In another embodiment of the invention the plastic film comprises at least one layer containing at least one thermoplastic plastic, wherein this layer contains at least one component a4), b3) and/or c3).

In a further advantageous embodiment of the invention the plastic film according to the invention comprises at least one layer containing a thermoplastic plastic, wherein this layer contains at least component c1), preferably c2), more preferably c3), and at least one of the components a1), preferably a2), more preferably a3), and most preferably a4) and/or b1), preferably b2), more preferably b3).

In another advantageous embodiment of the invention the plastic film according to the invention comprises at least one layer containing a thermoplastic plastic, wherein this layer contains at least component c1) and at least one of the components a1) and/or b1).

In a further advantageous embodiment of the invention the plastic film according to the invention comprises at least one layer containing a thermoplastic plastic, wherein this layer contains at least component c1) and at least one of the components a2) and/or b2).

In a further advantageous embodiment of the invention the plastic film according to the invention comprises at least one layer containing a thermoplastic plastic, wherein this layer contains at least component c1) and at least one of the components a3) and/or b3).

In a further advantageous embodiment of the invention the plastic film according to the invention comprises at least one layer containing a thermoplastic plastic, wherein this layer contains at least component c1) and at least one of the components a4) and/or b3).

In another advantageous embodiment of the invention the plastic film according to the invention comprises at least one layer containing a thermoplastic plastic, wherein this layer contains at least component c2) and at least one of the components a1) and/or b1).

In a further advantageous embodiment of the invention the plastic film according to the invention comprises at least one layer containing a thermoplastic plastic, wherein this layer contains at least component c2) and at least one of the components a2) and/or b2).

In a further advantageous embodiment of the invention the plastic film according to the invention comprises at least one layer containing a thermoplastic plastic, wherein this layer contains at least component c2) and at least one of the components a3) and/or b3).

In a further advantageous embodiment of the invention the plastic film according to the invention comprises at least one layer containing a thermoplastic plastic, wherein this layer contains at least component c2) and at least one of the components a4) and/or b3).

In another advantageous embodiment of the invention the plastic film according to the invention comprises at least one layer containing a thermoplastic plastic, wherein this layer contains at least component c3) and at least one of the components a1) and/or b1).

In a further advantageous embodiment of the invention the plastic film according to the invention comprises at least one layer containing a thermoplastic plastic, wherein this layer contains at least component c3) and at least one of the components a2) and/or b2).

In a further advantageous embodiment of the invention the plastic film according to the invention comprises at least one layer containing a thermoplastic plastic, wherein this layer contains at least component c3) and at least one of the components a3) and/or b3).

In a further advantageous embodiment of the invention the plastic film according to the invention comprises at least one layer containing a thermoplastic plastic, wherein this layer contains at least component c3) and at least one of the components a4) and/or b3).

The inscription of plastic films by means of laser engraving is referred to among experts and also hereinbelow as laser inscription for short. Accordingly, the expression "laser-inscribed" hereinbelow is to be understood as meaning inscribed by means of laser engraving. The process of laser engraving is known to the person skilled in the art and is not to be confused with printing by means of laser printing.

In a further embodiment of the film according to the invention the same also comprises a laser-sensitive additive, preferably a black pigment, more preferably carbon black.

Suitable laser-sensitive additives are, for example, so-called laser marking additives, that is to say additives comprising an absorber in the wavelength range of the laser to be used, preferably in the wavelength range of ND:YAG lasers (neodymium-doped yttrium-aluminium-garnet lasers). Such laser marking additives and their use in moulding compositions are described, for example, in WO-A 2004/50766 and WO-A 2004/50767 and are sold commercially by DSM under the trade name Micabs™. Further absorbers suitable as laser-sensitive additives are carbon black and phosphorus-containing tin/copper mixed oxides as described, for example, in WO-A 2006/042714.

Preference is given to laser-sensitive additives for inscription by laser engraving of dark on a light background. Particularly preferred laser-sensitive additives within the scope of the invention are black pigments. A most particularly preferred laser-sensitive additive is carbon black.

The presence of carbon black is therefore of particular advantage when the film according to the invention is also to be inscribed by means of laser engraving. Carbon black here acts firstly as a laser-sensitive additive and thus enables inscribing by means of laser engraving, and the presence of carbon black secondly has an advantageous effect on the reduction of the fluorescence of the film.

The laser-sensitive additive, preferably black pigments, more preferably carbon black, can be used in the film according to the invention in a quantity of ≥ 0.0001 wt.% to ≤ 0.015 wt.%, preferably ≥ 0.0002 wt.% to ≤ 0.0125 wt.%, wherein this information relates to the total quantity of the total film.

The laser-sensitive additive, preferably black pigments, more preferably carbon black, can have a particle size of ≥ 0.05 µm to ≤ 50 µm, preferably of ≥ 0.1 µm to ≤ 45 µm.

The layer thickness of the film according to the invention can be 20 µm to 375 µm, preferably of 30 µm to 250 µm and more preferably of 50 µm to 200 µm.

The laser-sensitive additive, preferably black pigments, more preferably carbon black, can either be contained in the at least one layer containing one thermoplastic plastic, comprising the components a), b) and/or c) and/or can be contained in a further additional layer, containing at least one thermoplastic plastic.

In one embodiment of the invention the at least one layer, containing at least one thermoplastic plastic, comprises at least one of the components a), b) and/or c) and at least one further layer containing a thermoplastic plastic, comprising carbon black. In this embodiment the components a), b) and/or c) can be contained in the quantity ranges, preferred ranges and embodiments already mentioned above.

In another embodiment the film comprises at least one layer containing a thermoplastic plastic, wherein this layer contains c1), preferably c2), more preferably c3) and at least one further layer, containing a thermoplastic plastic, comprising carbon black.

In another embodiment the film comprises at least one layer containing a thermoplastic plastic, wherein this layer contains c1), preferably c2), more preferably c3) and at least one further layer, containing a thermoplastic plastic comprising carbon black and c1), preferably c2), more preferably c3).

In another embodiment the film comprises at least one layer, containing a thermoplastic plastic, wherein this layer contains c1), preferably c2), more preferably c3) and at least one further layer containing a thermoplastic plastic, comprising carbon black, and at least one component c1), preferably c2), more preferably c3), b1), preferably b2), more preferably b3) and/or a1), preferably a2), more preferably a3), most preferably a4).

In another embodiment the film comprises at least one layer, containing a thermoplastic plastic, wherein this layer contains at least one component c1), preferably c2), more preferably c3) and at least one component b1), preferably b2), more preferably b3) and/or a1), preferably a2), more preferably a3), most preferably a4) and at least one further layer containing a thermoplastic plastic, comprising carbon black and at least one component c1), preferably c2), more preferably c3).

In a further embodiment the film comprises at least one layer containing a thermoplastic plastic, wherein this layer contains at least one component c1), preferably c2), more preferably c3) and at least one component b1), preferably b2), more preferably b3) and/or a1), preferably a2), more preferably a3), most preferably a4) and at least one further layer containing a thermoplastic plastic, comprising carbon black and at least one component c1), preferably c2), more preferably c3) and at least one component b1), preferably b2), more preferably b3) and/or a1), preferably a2), more preferably a3), most preferably a4).

The quantity information for components a) to c) already mentioned above should also be used.

The further layer containing at least one thermoplastic plastic comprising a laser-sensitive additive can have a layer thickness of 5 to 100 µm, preferably of 5 to 60 µm, wherein the total layer thickness of the film according to the invention has a thickness of 20 µm to 375 µm, preferably of 30 µm to 250 µm, more preferably of 50 µm to 200 µm.

The thermoplastic plastic of the plastic film according to the invention can preferably be at least one thermoplastic plastic selected from polymers of ethylenically unsaturated monomers and/or polycondensation products of bifunctional reactive compounds and/or polyaddition products of bifunctional reactive compounds. For some applications it can be advantageous, and accordingly preferred, to use a transparent thermoplastic plastic. Further layers containing at least one thermoplastic plastic can be present in the film according to the invention, wherein the thermoplastic plastic in these further layers can be the same or different.

Particularly suitable thermoplastic plastics are polycarbonates or copolycarbonates based on diphenols, poly- or copoly-acrylates and poly- or copoly-methacrylates, such as, for example and preferably, polymethyl methacrylate (PMMA), polymers or copolymers with styrene, such as, for example and preferably, polystyrene (PS) or polystyrene acrylonitrile (SAN), thermoplastic polyurethanes, as well as polyolefins, such as, for example and preferably, polypropylene types or polyolefins based on cyclic olefins (e.g. TOPAS™, Hoechst), poly- or copoly-condensation products of terephthalic acid, such as, for example and preferably, poly- or copoly-ethylene terephthalate (PET or CoPET), glycol-modified PET (PETG), glycol-modified poly- or copoly-cyclohexanedimethylene terephthalate (PCTG) or poly- or copoly-butylene terephthalate (PBT or CoPBT), poly- or copoly-condensation products of naphthalenedicarboxylic acid, such as, for example and preferably, polyethylene glycol naphthalate (PEN), poly- or copoly-condensation product(s) of at least one cycloalkyldicarboxylic acid, such as, for example and preferably, polycyclohexanedimethanolcyclohexanedicarboxylic acid (PCCD), polysulfones (PSU), or mixtures of the above-mentioned.

Preferred thermoplastic plastics are polycarbonates or copolycarbonates or blends containing at least one polycarbonate or copolycarbonate. Particular preference is given to blends containing at least one polycarbonate or copolycarbonate and at least one poly- or copoly-condensation product of terephthalic acid, naphthalenedicarboxylic acid or of a cycloalkyldicarboxylic acid, preferably of cyclohexanedicarboxylic acid. Most particular preference is given to polycarbonates or copolycarbonates, in particular having mean molecular weights M_{w} of from 500 to 100,000, preferably from 10,000 to 80,000, more preferably from 15,000 to 40,000, or blends thereof with at least one poly- or copoly-condensation product of terephthalic acid having mean molecular weights M_{w} of from 10,000 to 200,000, preferably from 26,000 to 120,000.

In preferred embodiments of the invention, polyalkylene terephthalates are suitable as poly- or copoly-condensation products of terephthalic acid. Suitable polyalkylene terephthalates are, for example, reaction products of aromatic dicarboxylic acids or reactive derivatives thereof (for example dimethyl esters or anhydrides) and aliphatic, cycloaliphatic or araliphatic diols and mixtures of these reaction products.

Preferred polyalkylene terephthalates can be prepared from terephthalic acid (or reactive derivatives thereof) and aliphatic or cycloaliphatic diols having from 2 to 10 carbon atoms by known methods (Kunststoff-Handbuch, Vol. VIII, p. 695 ff, Karl-Hanser-Verlag, Munich 1973).

Preferred polyalkylene terephthalates contain at least 80 mol%, preferably 90 mol%, terephthalic acid radicals, based on the dicarboxylic acid component, and at least 80 mol%, preferably at least 90 mol%, ethylene glycol and/or 1,4-butanediol and/or 1,4-cyclohexanedimethanol radicals, based on the diol component.

The preferred polyalkylene terephthalates can contain, in addition to terephthalic acid radicals, up to 20 mol% of radicals of other aromatic dicarboxylic acids having from 8 to 14 carbon atoms or aliphatic dicarboxylic acids having from 4 to 12 carbon atoms, for example radicals of phthalic acid, isophthalic acid, naphthalene-2,6-dicarboxylic acid, 4,4'-diphenyldicarboxylic acid, succinic, adipic, sebacic acid, azelaic acid, cyclohexanediacetic acid.

In addition to ethylene and 1,4-butanediol glycol radicals, the preferred polyalkylene terephthalates can contain up to 80 mol% of other aliphatic diols having from 3 to 12 carbon atoms or cycloaliphatic diols having from 6 to 21 carbon atoms, for example radicals of 1,3-propanediol, 2-ethyl-1,3-propanediol, neopentyl glycol, 1,5-pentanediol, 1,6-hexanediol, cyclohexane-1,4-dimethanol, 3-methyl-2,4-pentanediol, 2-methyl-2,4-pentanediol, 2,2,4-trimethyl-1,3-pentanediol and 2-ethyl-1,6-hexanediol, 2,2-diethyl-1,3-propanediol, 2,5-hexanediol, 1,4-di-([beta]-hydroxyethoxy)-benzene, 2,2-bis-(4-hydroxycyclohexyl)-propane, 2,4-dihydroxy-1,1,3,3-tetramethyl-cyclobutane, 2,2-bis-(3-[beta]-hydroxyethoxyphenyl)-propane and 2,2-bis-(4-hydroxypropoxyphenyl)-propane (see DE-OS 24 07 674, 24 07 776, 27 15 932).

The polyalkylene terephthalates can be branched by incorporating relatively small amounts of tri- or tetra-hydric alcohols or tri- or tetra-basic carboxylic acids, as are described, for example, in DE-OS 19 00 270 and US-PS 3 692 744. Examples of preferred branching agents are trimesic acid, trimellitic acid, trimethylol-ethane and - propane and pentaerythritol.

Preferably, not more than 1 mol% of the branching agent, based on the acid component, is used.

Particular preference is given to polyalkylene terephthalates which have been prepared solely from terephthalic acid and reactive derivatives thereof (for example dialkyl esters thereof) and ethylene glycol and/or 1,4-butanediol and/or 1,4-cyclohexanedimethanol radicals, and mixtures of these polyalkylene terephthalates.

Preferred polyalkylene terephthalates are also copolyesters, which are prepared from at least two of the above-mentioned acid components and/or from at least two of the above-mentioned alcohol components, whilst particularly preferred copolyesters are poly(ethylene glycol/1,4-butanediol) terephthalates.

The polyalkylene terephthalates preferably used as a component preferably have an intrinsic viscosity of approximately from 0.4 to 1.5 dl/g, preferably from 0.5 to 1.3 dl/g, in each case measured in phenol/o-dichlorobenzene (1:1 parts by weight) at 25°C.

In particularly preferred embodiments of the invention, the blend of at least one polycarbonate or copolycarbonate with at least one poly- or copoly-condensation product of terephthalic acid is a blend of at least one polycarbonate or copolycarbonate with poly- or copoly-butylene terephthalate or glycol-modified poly- or copoly-cyclohexanedimethylene terephthalate. Such a blend of polycarbonate or copolycarbonate with poly- or copoly-butylene terephthalate or glycol-modified poly- or copoly-cyclohexanedimethylene terephthalate can preferably be a blend containing from 1 to 90 wt.% polycarbonate or copolycarbonate and from 99 to 10 wt.% poly- or copoly-butylene terephthalate or glycol-modified poly- or copoly-cyclohexanedimethylene terephthalate, preferably containing from 1 to 90 wt.% polycarbonate and from 99 to 10 wt.% polybutylene terephthalate or glycol-modified polycyclohexanedimethylene terephthalate, the sum of the amounts being 100 wt.%. Such a blend of polycarbonate or copolycarbonate with poly- or copoly-butylene terephthalate or glycol-modified poly- or copoly-cyclohexanedimethylene terephthalate can particularly preferably be a blend containing from 20 to 85 wt.% polycarbonate or copolycarbonate and from 80 to 15 wt.% poly- or copoly-butylene terephthalate or glycol-modified poly- or copoly-cyclohexanedimethylene terephthalate, preferably containing from 20 to 85 wt.% polycarbonate and from 80 to 15 wt.% polybutylene terephthalate or glycol-modified polycyclohexanedimethylene terephthalate, the sum of the amounts being 100 wt.%. Such a blend of polycarbonate or copolycarbonate with poly- or copoly-butylene terephthalate or glycol-modified poly- or copoly-cyclohexanedimethylene terephthalate can most particularly preferably be a blend containing from 35 to 80 wt.% polycarbonate or copolycarbonate and from 65 to 20 wt.% poly- or copoly-butylene terephthalate or glycol-modified poly- or copoly-cyclohexanedimethylene terephthalate, preferably containing from 35 to 80 wt.% polycarbonate and from 65 to 20 wt.% polybutylene terephthalate or glycol-modified polycyclohexanedimethylene terephthalate, the sum of the amounts being 100 wt.%. In most particularly preferred embodiments, the blends can be blends of polycarbonate and glycol-modified polycyclohexanedimethylene terephthalate in the above-mentioned compositions.

In preferred embodiments, suitable polycarbonates or copolycarbonates are especially aromatic polycarbonates or copolycarbonates.

The polycarbonates or copolycarbonates can be linear or branched in known manner.

The preparation of these polycarbonates can take place in known manner from diphenols, carbonic acid derivatives, optionally chain terminators and optionally branching agents. Details regarding the preparation of polycarbonates have been recorded in many patent specifications for about 40 years. By way of example, reference is made here only to Schnell, "Chemistry and Physics of Polycarbonates", Polymer Reviews, Volume 9, Interscience Publishers, New York, London, Sydney 1964, to D. Freitag, U. Grigo, P. R. Müller, H. Nouvertne', BAYER AG, "Polycarbonates" in Encyclopedia of Polymer Science and Engineering, Volume 11, Second Edition, 1988, pages 648-718 and finally to Dres. U. Grigo, K. Kirchner and P. R. Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pages 117-299.

Suitable diphenols can be, for example, dihydroxyaryl compounds of the general formula (I)

HO-Z-OH (I)

wherein Z is an aromatic radical having from 6 to 34 carbon atoms which can contain one or more optionally substituted aromatic nuclei and aliphatic or cycloaliphatic radicals or alkyl aryls or heteroatoms as bridge members.

Examples of suitable dihydroxyaryl compounds are: dihydroxybenzenes, dihydroxydiphenyls, bis-(hydroxyphenyl)-alkanes, bis-(hydroxyphenyl)-cycloalkanes, bis-(hydroxyphenyl)-aryls, bis-(hydroxyphenyl) ethers, bis-(hydroxyphenyl) ketones, bis-(hydroxyphenyl) sulfides, bis-(hydroxyphenyl)-sulfones, bis-(hydroxyphenyl) sulfoxides, 1,1'-bis-(hydroxyphenyl)-diisopropylbenzenes, and the compounds thereof alkylated and halogenated on the ring.

These and further suitable dihydroxyaryl compounds are described, for example, in DE-A 3 832 396, FR-A 1 561 518, in H. Schnell, Chemistry and Physics of Polycarbonates, Interscience Publishers, New York 1964, p. 28 ff; p.102 ff and in D.G. Legrand, J.T. Bendler, Handbook of Polycarbonate Science and Technology, Marcel Dekker New York 2000, p. 72 ff.

Preferred dihydroxyaryl compounds are, for example, resorcinol, 4,4'-dihydroxydiphenyl, bis-(4-hydroxyphenyl)-methane, bis-(3,5-dimethyl-4-hydroxyphenyl)-methane, bis-(4-hydroxyphenyl)-diphenyl-methane, 1,1-bis-(4-hydroxyphenyl)-1-phenyl-ethane, 1,1-bis-(4-hydroxyphenyl)-1-(1-naphthyl)-ethane, 1,1-bis-(4-hydroxyphenyl)-1-(2-naphthyl)-ethane, 2,2-bis-(4-hydroxyphenyl)-propane, 2,2-bis-(3-methyl-4-hydroxyphenyl)-propane, 2,2-bis-(3,5-dimethyl-4-hydroxyphenyl)-propane, 2,2-bis-(4-hydroxyphenyl)-1-phenyl-propane, 2,2-bis-(4-hydroxyphenyl)-hexafluoro-propane, 2,4-bis-(4-hydroxyphenyl)-2-methyl-butane, 2,4-bis-(3,5-dimethyl-4-hydroxyphenyl)-2-methylbutane, 1,1-bis-(4-hydroxyphenyl)-cyclohexane, 1,1-bis-(3,5-dimethyl-4-hydroxyphenyl)-cyclohexane, 1,1-bis-(4-hydroxyphenyl)-4-methyl-cyclohexane, 1,3-bis-[2-(4-hydroxyphenyl)-2-propyl]-benzene, 1,1'-bis-(4-hydroxyphenyl)-3-diisopropylbenzene, 1,1'-bis-(4-hydroxyphenyl)-4-diisopropyl-benzene, 1,3-bis-[2-(3,5-dimethyl-4-hydroxyphenyl)-2-propyl]-benzene, bis-(4-hydroxyphenyl) ether, bis-(4-hydroxyphenyl) sulfide, bis-(4-hydroxyphenyl)-sulfone, bis-(3,5-dimethyl-4-hydroxyphenyl)-sulfone and 2,2',3,3'-tetrahydro-3,3,3',3'-tetramethyl-1,1'-spirobi-[1H-indene]-5,5'-diol or dihydroxydiphenylcycloalkanes of formula (Ia) 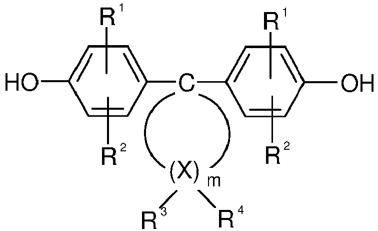 (Ia)
wherein
R¹ and R² independently of one another represent hydrogen, halogen, preferably chlorine or bromine, C₁-C₈-alkyl, C₅-C₆-cycloalkyl, C₆-C₁₀-aryl, preferably phenyl, and C₇-C₁₂-aralkyl, preferably phenyl-C₁-C₄-alkyl, in particular benzyl,
m represents an integer from 4 to 7, preferably 4 or 5,
R³ and R⁴, which can be chosen individually for each X, independently of one another represent hydrogen or C₁-C₆-alkyl and
X represents carbon,
   with the proviso that, on at least one atom X, R³ and R⁴ simultaneously represent alkyl. In formula (Ia), R³ and R⁴ are preferably simultaneously alkyl on one or two atom(s) X, in particular on only one atom X.

The preferred alkyl radical for the radicals R³ and R⁴ in formula (Ia) is methyl. The X atoms in the alpha-position relative to the diphenyl-substituted carbon atom (C-1) are preferably not dialkyl-substituted; alkyl disubstitution in the beta-position relative to C-1 is preferred, however.

Particularly preferred dihydroxydiphenylcycloalkanes of formula (Ia) are those having 5 and 6 ring carbon atoms X in the cycloaliphatic radical (m = 4 or 5 in formula (Ia)), for example the diphenols of formulae (Ia-1) to (Ia-3)

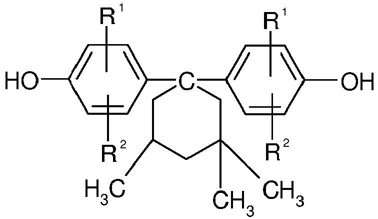

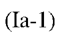

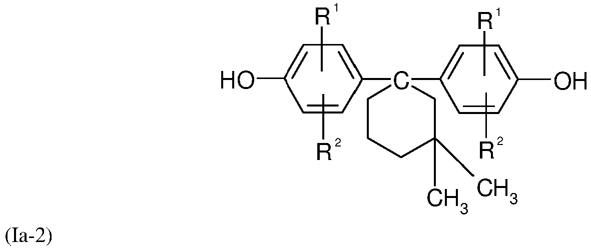

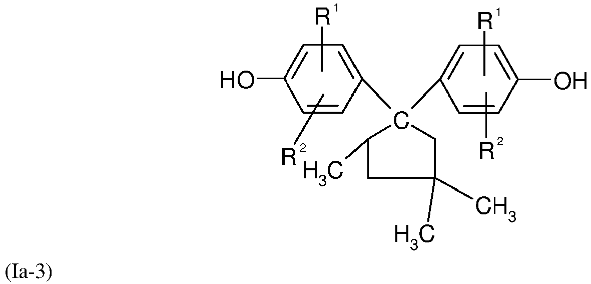

A most particularly preferred dihydroxydiphenylcycloalkane of formula (Ia) is 1,1-bis-(4-hydroxyphenyl)-3,3,5-trimethyl-cyclohexane (formula (Ia-1) wherein R¹ and R² are H).

Such polycarbonates can be prepared from dihydroxydiphenylcycloalkanes of formula (Ia) according to EP-A 359 953.

Particularly preferred dihydroxyaryl compounds are resorcinol, 4,4'-dihydroxydiphenyl, bis-(4-hydroxyphenyl)-diphenyl-methane, 1,1-bis-(4-hydroxyphenyl)-1-phenyl-ethane, bis-(4-hydroxyphenyl)-1-(1-naphthyl)-ethane, bis-(4-hydroxyphenyl)-1-(2-naphthyl)-ethane, 2,2-bis-(4-hydroxyphenyl)-propane, 2,2-bis(3,5-dimethyl-4-hydroxyphenyl)-propane, 1,1-bis-(4-hydroxyphenyl)-cyclohexane, 1,1-bis-(3,5-dimethyl-4-hydroxyphenyl)-cyclohexane, 1,1-bis-(4-hydroxyphenyl)-3,3,5-trimethyl-cyclohexane, 1,1'-bis-(4-hydroxyphenyl)-3-diisopropyl-benzene and 1,1'-bis-(4-hydroxyphenyl)-4-diisopropyl-benzene.

Most particularly preferred dihydroxyaryl compounds are 4,4'-dihydroxydiphenyl and 2,2-bis-(4-hydroxyphenyl)-propane.

It is possible to use both one dihydroxyaryl compound, with the formation of homopolycarbonates, and various dihydroxyaryl compounds, with the formation of copolycarbonates. It is possible to use both one dihydroxyaryl compound of formula (I) or (Ia), with the formation of homopolycarbonates, and a plurality of dihydroxyaryl compounds of formula (I) and/or (Ia), with the formation of copolycarbonates. The various dihydroxyaryl compounds can be linked together both randomly and block-wise. In the case of copolycarbonates of dihydroxyaryl compounds of formula (I) and (Ia), the molar ratio of dihydroxyaryl compounds of formula (Ia) to the other dihydroxyaryl compounds of formula (I) which are optionally to be used is preferably between 99 mol% of (Ia) to 1 mol% of (I) and 2 mol% of (Ia) to 98 mol% of (I), preferably between 99 mol% of (Ia) to 1 mol% of (I) and 10 mol% of (Ia) to 90 mol% of (I), and in particular between 99 mol% of (Ia) to 1 mol% of (I) and 30 mol% of (Ia) to 70 mol% of (I).

A most particularly preferred copolycarbonate can be prepared using 1,1-bis-(4-hydroxyphenyl)-3,3,5-trimethyl-cyclohexane and 2,2-bis-(4-hydroxyphenyl)-propane dihydroxyaryl compounds of formulae (Ia) and (I).

Suitable carbonic acid derivatives can be, for example, diaryl carbonates of the general formula (II) 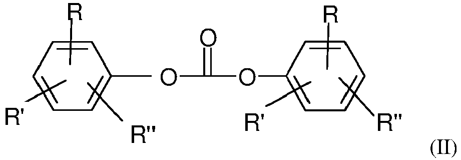 wherein
- R, R' and R",: which are the same or different, independently of one another represent hydrogen, linear or branched C₁-C₃₄-alkyl, C₇-C₃₄-alkylaryl or C₆-C₃₄-aryl, R can further also represent -COO-R"', wherein R"' represents hydrogen, linear or branched C₁-C₃₄-alkyl, C₇-C₃₄-alkylaryl or C₆-C₃₄-aryl.

Preferred diaryl carbonates are, for example, diphenyl carbonate, methylphenyl-phenyl carbonate and di-(methylphenyl) carbonate, 4-ethylphenyl-phenyl carbonate, di-(4-ethylphenyl) carbonate, 4-n-propylphenyl-phenyl carbonate, di-(4-n-propylphenyl) carbonate, 4-isopropylphenyl-phenyl carbonate, di-(4-isopropylphenyl) carbonate, 4-n-butylphenyl-phenyl carbonate, di-(4-n-butylphenyl) carbonate, 4-isobutylphenyl-phenyl carbonate, di-(4-iso-butylphenyl) carbonate, 4-tert-butylphenyl-phenyl carbonate, di-(4-tert-butylphenyl) carbonate, 4-n-pentylphenyl-phenyl carbonate, di-(4-n-pentylphenyl) carbonate, 4-n-hexylphenyl-phenyl carbonate, di-(4-n-hexylphenyl) carbonate, 4-isooctylphenyl-phenyl carbonate, di-(4-isooctylphenyl) carbonate, 4-n-nonylphenyl-phenyl carbonate, di-(4-n-nonylphenyl) carbonate, 4-cyclohexylphenyl-phenyl carbonate, di-(4-cyclohexylphenyl) carbonate, 4-(1-methyl-1-phenylethyl)-phenyl-phenyl carbonate, di-[4-(1-methyl-1-phenylethyl)-phenyl] carbonate, biphenyl-4-yl-phenyl carbonate, di-(biphenyl-4-yl) carbonate, 4-(1-naphthyl)-phenyl-phenyl carbonate, 4-(2-naphthyl)-phenyl-phenyl carbonate, di-[4-(1-naphthyl)-phenyl] carbonate, di-[4-(2-naphthyl)phenyl] carbonate, 4-phenoxyphenyl-phenyl carbonate, di-(4-phenoxyphenyl) carbonate, 3-pentadecylphenyl-phenyl carbonate, di-(3-pentadecylphenyl) carbonate, 4-tritylphenyl-phenyl carbonate, di-(4-tritylphenyl) carbonate, methylsalicylate-phenyl carbonate, di-(methylsalicylate) carbonate, ethylsalicylate-phenyl carbonate, di-(ethylsalicylate) carbonate, n-propylsalicylate-phenyl carbonate, di-(n-propylsalicylate) carbonate, isopropylsalicylate-phenyl carbonate, di-(isopropylsalicylate) carbonate, n-butylsalicylate-phenyl carbonate, di-(n-butylsalicylate) carbonate, isobutylsalicylate-phenyl carbonate, di-(iso-butylsalicylate) carbonate, tert-butylsalicylate-phenyl carbonate, di-(tert-butylsalicylate) carbonate, di-(phenylsalicylate) carbonate and di-(benzylsalicylate) carbonate.

Particularly preferred diaryl compounds are diphenyl carbonate, 4-tert-butylphenyl-phenyl carbonate, di-(4-tert-butylphenyl) carbonate, biphenyl-4-yl-phenyl carbonate, di-(biphenyl-4-yl) carbonate, 4-(1-methyl-1-phenylethyl)-phenyl-phenyl carbonate, di-[4-(1-methyl-1-phenylethyl)-phenyl] carbonate and di-(methylsalicylate) carbonate.

Diphenyl carbonate is most particularly preferred.

It is possible to use both one diaryl carbonate and various diaryl carbonates.

In order to control or modify the end groups, it is additionally possible to use as chain terminators, for example, one or more monohydroxyaryl compound(s) that have not been employed in the preparation of the diaryl carbonate(s) used. Such compounds can be those of the general formula (III) 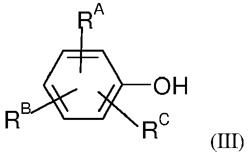 wherein
- R^{A}: represents linear or branched C₁-C₃₄-alkyl, C₇-C₃₄-alkylaryl, C₆-C₃₄-aryl or -COO-R^{D}, wherein R^{D} represents hydrogen, linear or branched C₁-C₃₄-alkyl, C₇-C₃₄-alkylaryl or C₆-C₃₄-aryl, and
- R^{B}, R^{C},: which are the same or different, independently of one another represent hydrogen, linear or branched C₁-C₃₄-alkyl, C₇-C₃₄-alkylaryl or C₆-C₃₄-aryl.

Such monohydroxyaryl compounds are, for example, 1-, 2- or 3-methylphenol, 2,4-dimethylphenol, 4-ethylphenol, 4-n-propylphenol, 4-isopropylphenol, 4-n-butylphenol, 4-isobutylphenol, 4-tert-butylphenol, 4-n-pentylphenol, 4-n-hexylphenol, 4-isooctylphenol, 4-n-nonylphenol, 3-pentadecylphenol, 4-cyclohexylphenol, 4-(1-methyl-1-phenylethyl)-phenol, 4-phenylphenol, 4-phenoxyphenol, 4-(1-naphthyl)-phenol, 4-(2-naphthyl)-phenol, 4-tritylphenol, methyl salicylate, ethyl salicylate, n-propyl salicylate, isopropyl salicylate, n-butyl salicylate, isobutyl salicylate, tert-butyl salicylate, phenyl salicylate and benzyl salicylate. 4-tert-butylphenol, 4-isooctylphenol and 3-pentadecylphenol are preferred.

Suitable branching agents can be compounds having three or more functional groups, preferably those having three or more hydroxyl groups.

Suitable compounds having three or more phenolic hydroxyl groups are, for example, phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-(4,4-bis-(4-hydroxyphenyl)-cyclohexyl] -propane, 2,4-bis-(4-hydroxyphenyl-isopropyl)-phenol and tetra-(4-hydroxyphenyl)-methane.

Other suitable compounds having three or more functional groups are, for example, 2,4-dihydroxybenzoic acid, trimesic acid (trichloride), cyanuric acid trichloride and 3,3-bis-(3-methyl-4-hydroxyphenyl)-2-oxo-2,3-dihydroindole.

Preferred branching agents are 3,3-bis-(3-methyl-4-hydroxyphenyl)-2-oxo-2,3-dihydroindole and 1,1,1-tri-(4-hydroxyphenyl)-ethane.

The plastic film according to the invention can additionally comprise at least one filler. The filler is preferably at least one colouring pigment and/or at least one other filler for producing translucency of the filled layers, particularly preferably a white pigment, most particularly preferably titanium dioxide, zirconium dioxide or barium sulfate, in a preferred embodiment titanium dioxide. The filler can either be additionally present in the at least one layer containing a thermoplastic plastic, wherein this layer can comprise a), b) and/or c), or be contained in a further layer containing at least one thermoplastic plastic. The layer preferably contains at least one thermoplastic plastic, wherein this layer comprises the compounds a), b) and/or c), transparently.

The filling of a layer containing at least one thermoplastic plastic with at least one such filler improves the visibility of the incorporated inscription or image(s), as a result of which the perception of the improved sharpness and resolution is also increased further.

The mentioned fillers are preferably added to the thermoplastic plastics in amounts of from 2 to 45 wt.%, particularly preferably from 5 to 30 wt.%, based on the total weight of filler and thermoplastic plastic, before the plastic film is shaped, which can take place, for example, by extrusion or coextrusion.

The film according to the invention can preferably be produced by means of extrusion where it consists of a single layer. Where the film according to the invention contains at least two layers it ca for example be produced through coating of polymer solutions, or preferably through coextrusion of the layers present, lamination of the layers that are present or extrusion lamination, that is to say extrusion coating of the layer(s) containing at least one thermoplastic plastic and a), b) and/or c) onto a prefabricated layer. The variants coextrusion and extrusion coating are preferred for producing at least two-layer films. Production by means of coextrusion is most particularly preferred.

Such a film produced by means of extrusion represents a particularly preferred embodiment of the plastic film according to the invention and is likewise provided by the invention.

Accordingly, the present invention provides an extruded film containing at least one layer containing at least one thermoplastic plastic, characterised in that the layer comprises at least one
component a)
   a1) a pigment and/or a pigment mixture, preferably a2) a pigment and/or pigment mixture from the group of soluble pigments, preferably a3) a soluble pigment mixture, the concentration and mixture ratio of which are adjusted in such a way that a light transmission of ≤ 55% is achieved for a film thickness of 500 µm over the entire spectral range between 400 nm and 650 nm, most preferably a4) a pigment mixture of Solvent Orange 60, Solvent Red 52, Solvent Green 3 and/or Solvent Blue 97 according to classification of CI, the concentration and mixture ratio of which is adjusted in such a way that a light transmission of ≤ 55% is achieved for a film thickness of 500 µm over the entire spectral range between 400 nm and 650 nm,
component b)
   b1) metal powder, its alloy and/or metal oxides, wherein the metals of the group of non-ferrous metals are excluded, preferably b2) metal powder, its alloys and/or metal oxides from the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium, more preferably b3) metal powder, its alloys and/or metal oxides from the group consisting of Tungsten, iron, nickel, titanium and cobalt,
and/or component c)
   c1) UV absorbers with an absorption effect within a range of 200 nm to 400 nm, preferably within a range of 240 nm to 390 nm, preferably c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles.

The preferred ranges already mentioned above should also be applied for the extrusion film.

A further embodiment is an at least two-layer coextruded film which comprises at least one layer containing a thermoplastic plastic comprising a), b) and/or c) and at least one layer containing at least one thermoplastic plastic comprising a laser-sensitive additive, preferably carbon black. The further layer contains a thermoplastic plastic comprising a laser-sensitive additive, preferably carbon black, and can also contain a), b) and/or c).

The statements made above in respect of the plastic film according to the invention, including the mentioned layer thicknesses, constituents and preferred ranges, apply analogously to the coextruded film according to the invention.

The plastic film according to the invention and the coextruded film according to the invention can comprise further, preferably transparent layers containing at least one of the above-mentioned thermoplastic plastics.

The plastic film according to the invention, and accordingly also the coextruded film according to the invention, is outstandingly suitable as a component of security documents, preferably identification documents, which can also be inscribed by means of laser engraving.

The plastic film according to the invention as well as the coextrusion films according to the invention are characterised in that they have very low UV activity and therefore offer extensive possibilities for insertion into security elements of the film as well as into the coextrusion film. The quality of the laser engraving and the transparency of the plastic film or the coextrusion films are also not affected in a disadvantageous way.

The plastic film according to the invention is therefore preferably suitable for identification documents in the form of bonded or laminated composites in the form of plastics cards, for example identity cards, passports, driving licences, credit cards, bank cards, cards for controlling access or other identity documents, etc. Preferred identification documents within the scope of the present invention are multilayered sheet-like documents having security features such as chips, photographs, biometric data, etc. These security features can be visible or at least scanable from the outside. Such an identification document preferably has a size between that of a bank card and that of a passport. Such an identification document can also be part of a document having several parts, such as, for example, an identification document of a plastic material in a passport which also contains parts made of paper or card.

Accordingly, the invention further provides a security document, preferably an identification document, comprising at least one plastic film and/or coextrusion film according to the invention.

The security document, preferably identification document, according to the invention can comprise further additional layers via which further information, for example, can be incorporated into the security document, preferably the identification document.

Such further information can be, for example, personalising portraits or non-personalising general information which, for example, is contained in the same form in any generic security document, preferably any identification document.

Such layers can be incorporated into the security document, preferably identification document, from, for example, films previously provided with the information by means of conventional printing processes, preferably ink-jet or laser printing, more preferably ink-jet printing.

Films which can be printed by means of ink-jet printing processes are known to the person skilled in the art and can be, for example, films comprising at least one of the above-described thermoplastic plastics optionally containing at least one of the above-described fillers. Plastics films coloured white or translucent by means of fillers such as, for example, titanium dioxide, zirconium dioxide, barium sulfate, etc. can be used for the purpose of better visibility of the printed information.

For films to be printed by means of laser printing, in particular by means of colour laser printing, there are suitable in particular plastic films of one of the above-mentioned thermoplastic plastics having a specific surface resistance of from 107 to 10¹³ Ω, preferably from 10⁸ to 10¹² Ω. The specific surface resistance in Ω is determined in accordance with DIN IEC 93.

The films can preferably be films in which there has been added to the thermoplastic plastic, in order to achieve the specific surface resistance, for example an additive selected from tertiary or quaternary, preferably quaternary, ammonium or phosphonium salts of a partially fluorinated or perfluorinated organic acid or quaternary ammonium or phosphonium hexafluorophosphates, preferably of a partially fluorinated or perfluorinated alkylsulfonic acid, preferably of a perfluoroalkylsulfonic acid.

Preferred suitable quaternary ammonium or phosphonium salts are:
- perfluorooctanesulfonic acid tetrapropylammonium salt,
- perfluorobutanesulfonic acid tetrapropylammonium salt,
- perfluorooctanesulfonic acid tetrabutylammonium salt,
- perfluorobutanesulfonic acid tetrabutylammonium salt,
- perfluorooctanesulfonic acid tetrapentylammonium salt,
- perfluorobutanesulfonic acid tetrapentylammonium salt,
- perfluorooctanesulfonic acid tetrahexylammonium salt,
- perfluorobutanesulfonic acid tetrahexylammonium salt,
- perfluorobutanesulfonic acid trimethylneopentylammonium salt,
- perfluorooctanesulfonic acid trimethylneopentylammonium salt,
- perfluorobutanesulfonic acid dimethyldineopentylammonium salt,
- perfluorooctanesulfonic acid dimethyldineopentylammonium salt,
- N-methyl-tripropylammonium perfluorobutylsulfonate,
- N-ethyl-tripropylammonium perfluorobutylsulfonate,
- tetrapropylammonium perfluorobutylsulfonate,
- diisopropyldimethylammonium perfluorobutylsulfonate,
- diisopropyldimethylammonium perfluorooctylsulfonate,
- N-methyl-tributylammonium perfluorooctylsulfonate,
- cyclohexyldiethylmethylammonium perfluorooctylsulfonate,
- cyclohexyltrimethylammonium perfluorooctylsulfonate, and the corresponding phosphonium salts. The ammonium salts are preferred.

Preferably, it is also possible to use one or more of the above-mentioned quaternary ammonium or phosphonium salts, that is to say also mixtures.

The perfluorooctanesulfonic acid tetrapropylammonium salt, perfluorooctanesulfonic acid tetrabutylammonium salt, perfluorooctanesulfonic acid tetrapentylammonium salt, perfluorooctanesulfonic acid tetrahexylammonium salt and perfluoroctanesulfonic acid dimethyldiisopropylammonium salt, and the corresponding perfluorobutanesulfonic acid salts, are most particularly suitable.

In a most particularly preferred embodiment, perfluorobutanesulfonic acid dimethyldiisopropylammonium salt (diisopropyldimethylammonium perfluorobutane-sulfonate) can be used as an additive.

The mentioned salts are known or can be prepared by known methods. The salts of the sulfonic acids can be prepared, for example, by combining equimolar amounts of the free sulfonic acid with the hydroxy form of the corresponding cation in water at room temperature and concentrating the solution. Other preparation processes are described, for example, in DE-A 1 966 931 and NL-A 7 802 830.

The mentioned salts are preferably added to the thermoplastic plastics in amounts of 0.001 to 2 wt.%, preferably of 0.1 to 1 wt.%, before shaping of the plastic film, which can be carried out, for example, by extrusion or coextrusion.

The security document, preferably identification document, according to the invention can also comprise further additional layers which provide protection against UV radiation, protection against mechanical damage - for example scratch-resistant coatings - etc.

The security document, preferably identification document, according to the invention can be produced, for example, in that a stack of films is formed from the various films for constructing the security document and is laminated to give a composite and then cut into the suitable form of the security document, preferably identification document. Further layers can optionally subsequently be applied to the composite laminate, for example by adhesive bonding and/or lamination of further films or by coating by means of lacquer compositions.

The following examples serve to explain the invention by way of example and are not to be interpreted as limiting.

### Examples

### Makrolon™ 3108 550115

Colourless, highly viscous bisphenol A polycarbonate with an MVR of 6.0 cm³/10min according to ISO 1133 at 300°C and 1.2 kg)

### Makrolon™ 3108 000000

Naturally coloured, highly viscous bisphenol A polycarbonate with an MVR of 6.0 cm³/10min according to ISO 1133 at 300°C and 1.2 kg)

### Kronos™ 2230 (titanium oxide)

Polysiloxane and aluminium surface-treated titanium oxide from Kronos Worldwide Inc.

### Macrolex™ Violet B GR, Macrolex™ Orange 3G, Macrolex™ Red 5B, Macrolex™ Green 5B, Macrolex™ Blue RR

Soluble pigments from Lanxess AG

### Tinuvin™ 360

Non-volatile benzotriazole UV absorbers from BASF
Phenol, 2,2'-methylene-bis(6-(2H-benzotriazol-2-yl)-4-(1,1,3,3-tetramethylbutyl)

### Tinuvin™ 1600

Non-volatile 2-hydroxyphenyl-s-triazine UV absorbers with optimised UV absorption

### Bayferrox™ 303T

Black ferrous oxide powder (manganese ferrite) from Lanxess

### iPumag™ iron powder

iron metal powder from iPutec GmbH with an iron content of approx. 890%, 17% chromium, approx. 1% manganese, approx. 1% aluminium and approx. 1% silicon

### Tungsten powder 99+

Fine-grained Tungsten powder with a purity of >99% and with a particle diameter of < 10 µm from Merck

### Vulcan™ XC 72

Conductive carbon black from Cabot with a mean particle size of 95 nm

### Example 1: Compounding

### Production of the laser-inscribable master batch:

Production of the laser-inscribable compound with a conventional twin-screw compounding extruder (for example ZSK 32) at conventional polycarbonate processing temperatures of 250 to 330°C.

A master batch having the following composition was produced:
- Makrolon™ 3108 550115 polycarbonate from Covestro Deutschland AG in an amount of 99.994 wt.%
- Vulcan™ XC 72 (carbon black from Cabot) having a mean particle size of 95 nm in an amount of 0.006 wt.% (60 ppm).

### Example 2: Compounding

### Production of Tinuvin™ 360 UV compound:

Production of Tinuvin™ 360 UV compound (granulate) was carried out with a conventional twin-screw compounding extruder at conventional polycarbonate processing temperatures of 275 to 300°C.

A master batch with the following composition was produced:
- Makrolon™ 3108 000000 polycarbonate from Covestro Deutschland AG in an amount of 95 wt.%
- Tinuvin™ 360 as a colourless powder in an amount of 5 wt.%
10kg/h powder compound, consisting of 5 kg Makrolon™ 3108 grit (mean particle diameter approx. 0.8mm) and 5 kg Tinuvin™ 360, equalling 5 wt.%, were added to 90 kg Makrolon™ 3108 000000 in a twin-screw compounding extruder (ZSK 32) at a rotation speed of 175 min⁻¹ and a throughput of 50kg/h. The mass temperature was 306°C and the resulting granulate was clear and transparent.

### Example 3: Compounding

### Production of Tinuvin™ 1600 UV protection compound:

Production of Tinuvin™ 1600 UV protection compound (granulate) was carried out with a conventional twin-screw compounding extruder at conventional Makrolon™ 3108 000000 processing temperatures of 275 to 300°C.

A master batch with the following composition was produced:
- Makrolon™ 3108 000000 polycarbonate from Covestro Deutschland AG in an amount of 95 wt.%
- Tinuvin™ 1600 from BASF SE (formerly Ciba Speciality Chemicals) as a colourless powder in an amount of 3 wt.%
15kg/h powder compound, consisting of Makrolon™ 3108 000000 grit (mean particle diameter approx. 0.8mm) and 3 kg Tinuvin™ 1600, equalling 3 wt.%, were added to 85 kg Makrolon™ 3108 000000 in a twin-screw compounding extruder (ZSK 32) at a rotation speed of 190 min⁻¹ and a throughput of 50kg/h. The mass temperature was 278°C and the resulting granulate was clear and transparent.

### Example 4: Compounding

### Production of white master batch:

Production of white pigmented compound was carried out with a conventional twin-screw compounding extruder (for example ZSK 32) at conventional polycarbonate processing temperatures of 250 to 330°C.

A master batch with the following composition was produced
- Makrolon™ 3108 000000 polycarbonate from Covestro Deutschland AG in an amount of 85 wt.%
- Titanium dioxide (Kronos™ 2230 from Kronos Inc.) in an amount of 15 wt.% by means of extrusion.

### Example 5: Compounding

### Production of a grey-coloured master batch:

Production of the master batch was carried out with a conventional twin-screw compounding extruder (for example ZSK 32) at conventional polycarbonate processing temperatures of 250 to 330°C.

A master batch with the following composition was produced:
- 95.0 wt.% Makrolon™ 3108 000000 polycarbonate from Covestro Deutschland AG
- 5 wt.% of a powder mixture consisting of
   o 4.374 wt.% Makrolon™ 3108 000000 polycarbonate, ground, from Covestro Deutschland AG
   o 0.226 wt.% Macrolex™ Orange 3G
   o 0.181 wt.% Macrolex™ Red 5B
   o 0.121 wt.% Macrolex™ Green 5B
   o 0.098 wt.% Macrolex™ Blue RR
5kg/h powder mixture, consisting of 4.374 kg Makrolon™ 3108 grit (obtained by grinding from granulate) (mean particle diameter approx. 0.8mm, measured according to ISO 13320-1 (laser diffraction method)) and 0.626 kg of a mixture of the 4 Macrolex™ pigments were added to 95 kg Makrolon™ 3108 000000 in a twin-screw compounding extruder (ZSK 32) at a rotation speed of 175 min⁻¹. The mass temperature was 306°C and the resulting granulate was black.

### Example 6: Compounding

### Production of a black ferrous oxide master batch:

Production of the master batch was carried out with a conventional twin-screw compounding extruder (for example ZSK 32) at conventional polycarbonate processing temperatures of 250 to 330°C.

A master batch with the following composition was produced:
- 95.0 wt.% Makrolon™ 3108 000000 polycarbonate from Covestro Deutschland AG
- 5 wt.% of a powder mixture consisting of
   o 4.95 wt.% Makrolon™ 3108 000000 polycarbonate, ground, from Covestro Deutschland AG
   o 0.05 wt.% Bayferrox™ 303T
5kg/h powder mixture, consisting of 4.95 kg Makrolon™ 3108 grit (obtained by grinding from granulate) (mean particle diameter approx. 0.8mm, measured according to ISO 13320-1 (laser diffraction method)) and 0.05 kg black ferrous oxide were added to 95 kg Makrolon™ 3108 000000 in a twin-screw compounding extruder (ZSK 32) at a rotation speed of 175 min⁻¹. The mass temperature was 306°C and the resulting granulate was black.

### Example 7: Compounding

### Production of a Tungsten metal powder master batch:

Production of the master batch was carried out with a conventional twin-screw compounding extruder (for example ZSK 32) at conventional polycarbonate processing temperatures of 250 to 330°C.

A master batch with the following composition was produced:
- 95.0 wt.% Makrolon™ 3108 550115 polycarbonate from Covestro Deutschland AG
- 5 wt.% of a powder mixture consisting of
   ∘ 4.95 wt.% Makrolon™ 3108 000000 polycarbonate, ground, from Covestro Deutschland AG
   ∘ 0.05 wt.% fine Tungsten powder 99+
5kg/h powder mixture, consisting of 4.95 kg Makrolon™ 3108 grit (obtained by grinding from granulate) (mean particle diameter approx. 0.8mm, measured according to ISO 13320-1 (laser diffraction method)) and 0.05 kg fine Tungsten powder 99+ were added to 95 kg Makrolon™ 3108 000000 in a twin-screw compounding extruder (ZSK 32) at a rotation speed of 175 min⁻¹. The mass temperature was 305°C and the resulting granulate was black.

### Example 8: Compounding

### Production of a iron metal powder master batch:

Production of the master batch was carried out with a conventional twin-screw compounding extruder (for example ZSK 32) at conventional polycarbonate processing temperatures of 250 to 330°C.

A master batch with the following composition was produced:
- 95.0 wt.% Makrolon™ polycarbonate 3108 550115 from Covestro Deutschland AG
- 5 wt.% of a powder mixture consisting of
   o 4.95 wt.% Makrolon™ 3108 000000 polycarbonate, ground, from Covestro Deutschland AG
   o 0.05 wt.% iPumag™ iron powder
5kg/h powder mixture, consisting of 4.95 kg Makrolon™ 3108 grit (obtained by grinding from granulate) (mean particle diameter approx. 0.8mm, measured according to ISO 13320-1 (laser diffraction method)) and 0.05 kg iPumag™ iron powder were added to 95 kg Makrolon™ 3108 000000 in a twin-screw compounding extruder (ZSK 32) at a rotation speed of 175 min⁻¹. The mass temperature was 307°C and the resulting granulate was black.

### Example 9: Compounding

### Production of an antidust master batch:

Production of the white pigmented compound was carried out with a conventional twin-screw compounding extruder (for example ZSK 32) at conventional polycarbonate processing temperatures of 250 to 330°C.

A master batch with the following composition
- Makrolon™ 3108 000000 polycarbonate from Covestro Deutschland AG in an amount of 98 wt.%
- diisopropyldimethylammonium perfluorobutylsulfonate as a colourless powder in an amount of 2 wt.%
was produced by means of extrusion.

### Example 10: Film production

The machines and apparatus used for producing the coextruded films comprise:
- an extruder with a screw of 60mm diameter (D) and a length of 33xD. The screw has a degassing zone;
- optionally, if a coextrusion film is produced: a coextruder for applying the covering layer with a screw of a length of 25 D and a diameter of 35mm;
- a smelting pump;
- a crosshead die;
- a special coextrusion fishtail nozzle with 450mm width;
- a three-cylinder polishing stack with horizontal cylinder arrangement, wherein the third cylinder can be pivoted in relation to the horizontal by +/- 45°
- a roller track;
- thickness measurement;
- a means for the double-sided application of protective film;
- a removal means;
- a rewinding station.

The relevant granulate was supplied to the filling funnel of the extruder. The smelting and conveying of material took place in the plasticising system cylinder/screw of the extruder. The material smelt was supplied to the polishing stack, the cylinders of which had the temperature listed in Table 1. Final shaping and cooling of the film took place on the polishing stack (consisting of three cylinders). A rubber cylinder (4x of surface) , a polished chrome cylinder (1x surface) or a structured steel cylinder (2x and 6x surfaces) were optionally used for structuring the film surface. The rubber cylinder used for structuring the film surface is disclosed in US-4 368 240 of company Nauta Roll Corporation.

The following process parameters were selected:

**Table 1:**

| | |
|---|---|
| Temperature of main extruder | 295 °C +/- 5°C |
| Temperature of coextruder (optional) | 270 °C +/-5°C |
| Temperature of crosshead die | 285 °C +/-5°C |
| Temperature of nozzle | 300 °C +/-5°C |
| Rotation speed of main extruder | 60 min⁻¹ |
| Rotation speed of coextruder | 31 min⁻¹ |
| Temperature of cylinder 1 | 76 °C |
| Temperature of cylinder 2 | 73 °C |
| Temperature of cylinder 3 | 140 °C |

Mono-layer and twin-layer films were extruded according to the illustrated process:

**Table 2: mono-layer films**

| Description | Construction | Additives a) to d) |
|---|---|---|
| 10-1) comparison | 50 µm | Without additive |
| | 100% M. | |
| 10-2) | 100µm | 0.005% ferrous oxide (additive b)) |
| | 10% Ex. 6 + 90% M. | |
| 10-3) | 100µm | 0.005% Tungsten powder (additive b)) |
| | 10% Ex. 7 + 90% M. | |
| 10-4) | 100µm | 0.005% iron powder (additive b)) |
| | 10% Ex. 8 + 90% M. | |
| 10-5) | 50µm mono-film | 0.6% UV absorber Tinuvin™ 360 |
| | 88% M. + 12% Ex. 2 | (additive d)) |
| 10-6) | 100µm | 0.6% UV absorber Tinuvin™ 360 |
| | 88% M. + 12% Ex. 2 | (additive d)) |
| 10-7) | 100µm | 0.6% UV absorber Tinuvin™ 360 |
| | 77.2% M. + 12% Ex. 2 + | (additive d)) + 0.00065% carbon black |
| | 10.8% Ex. 1 | (additive c)) |
| 10-8) | 100µm | 0.36% UV absorber Tinuvin™ 1600 |
| | 77.2% M.+ 12% Ex. 3 + 10.8% | (additive d)) + 0.00065% carbon black |
| | Ex. 1 | (additive c)) |

| | | |
|---|---|---|
| M. = Makrolon™ 3108 550115; Ex. = Example | | |

**Table 3: twin-layer coextrusion films**

| Description | Construction | | | |
|---|---|---|---|---|
| | Layer i) | Additives a) to d), in relation to total film | Layer ii) | Additives a) to d), in relation to total film |
| 10-9) Comp. | 100µm | No additive | 50µm | 0.0011036% carbon black (additive c)) |
| | 90% M. + 10% Ex. 9 | | 72% M. + 18% Ex. 1 + 10% Ex. 9 | |
| 10-10) | 100µm | 0.64% UV | 50µm | 0.0003611% carbon black (additive c)) |
| | 78% M. + 12% Ex. 2+ 10% Ex. 9 | absorber Tinuvin™ 360 (additive d)) | 72% M. + 18% Ex. 1 + 10% Ex. 9 | |
| 10-11) | 95µm | 0.6% UV | 55µm | 0.6% UV absorber Tinuvin™ 360 (additive d)) + 0.0011036% carbon black (additive c)) |
| | 78% M. + 12% Ex. 2 + 10% Ex. 9 | absorber Tinuvin™ 360 (additive d)) | 60% M. 3108 550115 + 18% Ex. 1 +12% Ex. 2+ 10% Ex. 9 | |
| 10-12) | 100µm | 0.6% UV | 50µm | 0.6% UV absorber Tinuvin™ 360 (additive d)) + 0.0011036% carbon black (additive c)) + )) + 0.005% ferrous oxide (additive b)) |
| | 68% M. + 12% Ex. 2 + 10% Ex. 9 + 10% Ex. 6 | absorber Tinuvin™ 360 (additive d)) + 0.005% ferrous oxide (additive b)) | 50% M. + 18% Ex. 1 +12% Ex. 2 + 10% Ex. 9 + 10% Ex. 6 | |
| 10-13) | 100µm | 0.6% UV | 50µm | 0.6% UV absorber Tinuvin™ 360 (additive d)) + 0.0011036% carbon black (additive c)) + )) + 0.005% ferrous oxide (additive b)) + 0.003% grey batch (additive a)) |
| | 67.5% M. + 12% Ex. 2 + 10% Ex. 9 + 10% Ex. 6 + 0.5% Ex. 5 | absorber Tinuvin™ 360 (additive d)) + 0.005% ferrous oxide (additive b)) + 0.003% grey batch (additive a)) | 49.5% M. + 18% Ex. 1 +12% Ex. 2 + 10% Ex. 9 + 10% Ex. 6 +0.5% Ex. 5 | |

| | | | | |
|---|---|---|---|---|
| M. = Makrolon™ 3108 550115; Comp. = ComparativeEx. = Example | | | | |

### Example 11: Laminate production for fluorescence measurement

Laminates of the following films were compressed for fluorescence measurements.

### White filled film:

A polycarbonate film with a thickness of 100 µm based on the compound of example 4 (Makrolon™ 3108 polycarbonate from Covestro Deutschland AG and titanium oxide (Kronos® 2230 from Kronos Titan) were produced as a white pigment filler with a composition of 85 wt.% Makrolon™ 3108 and 15 wt.% titanium oxide) at a mass temperature of approx. 280°C by means of extrusion.

Several layers of the films to be examined were laminated onto 2 layers of the above mentioned white filled film (a total base layer thickness of 200 µm) by combination with a transparent layer of a total of 300 µm to form a 500 µm thick laminate.

For this a stack each of the above mentioned sequence was formed from the films and lamination was carried out on a lamination press from Bürkle with the following parameters:
- preheating of the press to 170-180°C
- pressing for 8 minutes at a pressure of 15 N/cm²
- pressing for 2 minutes at a pressure of 200 N/cm²
- cooling of the press to 38°C and opening of the press.

### Example 12: Laminate production for measuring the intensity of edge shine

By combining several layers of the films to be investigated a transparent laminate with a total thickness of 800 µm was laminated.

For this a stack each of the above mentioned sequence was formed from the films and lamination was carried out on a lamination press from Bürkle with the following parameters:
- preheating of the press to 170-180°C
- pressing for 8 minutes at a pressure of 15 N/cm²
- pressing for 2 minutes at a pressure of 200 N/cm²
- cooling of the press to 38°C and opening of the press.

### Example 13: Fluorescence measurement

The fluorescence of laminates 11-1) to 11-14) from example 11 was measured in reflection by means of a fluorescence spectrometer from Perkin Elmer, type LS 55. Excitation wavelength 365 nm.

**Table 4: fluorescence measurement of mono-layer films**

| Description | Construction | Additives a) to d) | Fluorescence @ 425 nm |
|---|---|---|---|
| 13-1) Comparison | 50 µm | Without additives | 122.69 |
| | 100% M. | | |
| 13-2) | 100µm | 0.005% ferrous oxide (additive b)) | 103.84 |
| | 10% Ex. 6 + 90% M. | | |
| 13-3) | 100µm | 0.005% Tungsten powder (additive b)) | 105.73 |
| | 10% Ex. 7 + 90% M. | | |
| 13-4) | 100µm | 0.005% iron powder (additive b)) | 101.36 |
| | 10% Ex. 8 + 90% M. | | |
| 13-5) | 50µm mono-film | 0.6% UV absorber Tinuvin™ 360 (additive d)) | 19.99 |
| | 88% M. + 12% Ex. 2 | | |
| 13-6) | 100µm | 0.6% UV absorber Tinuvin™ 360 (additive d)) | 17.26 |
| | 88% M. + 12% Ex. 2 | | |
| 13-7) | 100µm | 0.6% UV absorber Tinuvin™ 360 (additive d)) + 0.00065% carbon black (additive c)) | 16.09 |
| | 77.2% M. + 12% Ex. 2 + | | |
| | 10.8% Ex. 1 | | |
| 13-8) | 100µm | 0.36% UV absorber Tinuvin™ 1600 (additive d)) + 0.00065% carbon black (additive c)) | 15.91 |
| | 77.2% M. + 12% Ex. 3 + | | |
| | 10.8% Ex. 1 | | |

| | | | |
|---|---|---|---|
| M. = Makrolon™ 3108 550115; Ex. = Example | | | |

**Table 5: fluorescence measurement of twin-layer coextrusion films**

| | Layer i) | Additives a) to d), in relation to total film | Layer ii) | Additives a) to d), in relation to total film | Fluorescence @ 425 nm |
|---|---|---|---|---|---|
| 13-10) Comparison | 100µm | No additive | 50µm | 0.00036% carbon black (additive c)) | 123.58 |
| | 90% M. + 10% Ex. 9 | | 72% M. + 18% Ex. 1 + 10% Ex. 9 | | |
| 13-11) | 100µm | 0.4% UV absorber Tinuvin 360 (additive d)) | 50µm | 0.00036% carbon black (additive c)) | 70.69 |
| | 78% M. + 12% Ex. 2 + 10% Ex. 9 | | 72% M. + 18% Ex. 1 + 10% Ex. 9 | | |
| 13-12) | 95µm | 0.6% UV absorber Tinuvin™ 360 (additive d)) | 55µm | 0.6% UV absorber Tinuvin™ 360 (additive d)) + 0.00036% carbon black (additive c)) | 58.39 |
| | 78% M. + 12% Ex. 2 + 10% Ex. 9 | | 60% M. + 18% Ex. 1 +12% Ex. 2 + 10% Ex. 9 | | |
| 13-13) | 100µm | 0.6% UV absorber Tinuvin™ 360 (additive d)) + 0.005% ferrous oxide (additive b)) | 50µm | 0.6% UV absorber Tinuvin™ 360 (additive d)) + 0.00036% carbon black (additive c)) + )) + 0.005% ferrous oxide (additive b)) | 48.46 |
| | 68% M. + 12% Ex. 2 + 10% Ex. 9 + 10% Ex. 6 | | 50% M. + 18% Ex. 1 +12% Ex. 2 + 10% Ex. 9 + 10% Ex. 6 | | |
| 13-14) | 100µm | 0.6% UV absorber Tinuvin™ 360 (additive d)) + 0.005% ferrous oxide (additive b)) + 0.003% grey batch (additive a)) | 50µm | 0.6% UV absorber Tinuvin™ 360 (additive d)) + 0.00036% carbon black (additive c)) + )) + 0.005% ferrous oxide (additive b)) + 0.003% grey batch (additive a)) | 50,00 |
| | 67.5% M. + 12% Ex. 2 + 10% Ex. 9 + 10% Ex. 6 + 0.5% Ex. 5 | | 49.5% M.3108 550115 + 18% Ex. 1 +12% Ex. 2 + 10% Ex. 9 + 10% Ex. 6 +0.5% Ex. 5 | | |

| | | | | | |
|---|---|---|---|---|---|
| M. = Makrolon™3108 550115; Ex. = Example | | | | | |

### Example 14: Determination of intensity of edge shine by means of light density measurement

Three of the 800 µm thick laminates from example 12 were stacked and assembled with a tripod in a black light chamber from X-Rite. The light density of the edge of the 3x laminate stack was then measured through a pinhole aperture with a light density camera "Minolta LS 100" from Minolta. A total of 5 measurements each were carried out. Particle-containing films

**Table 6: edge shine measurement of mono-films**

| Description | Construction | Additives a) to d) | Edge shine light density Cd/m² |
|---|---|---|---|
| 14-1) Comparison | 50 µm | Without additive | 3.009 |
| | 100% Makrolon™ 3108 550115 | | |
| 14-2) | 100µm | 0.005% ferrous oxide (additive b)) | 0.421 |
| | 10% Ex. 6 + 90% M. | | |
| 14-3) | 100µm | 0.005% Tungsten powder (additive b)) | 2.423 |
| | 10% Ex. 7 + 90% M. | | |
| 14-4) | 100µm | 0.005% iron powder (additive b)) | 2.501 |
| | 10% Ex. 8 + 90% M. | | |
| 14-5) | 50µm mono-film | 0.6% UV absorber Tinuvin™ 360 (additive d)) | 2.936 |
| | 88% M. + 12% Ex. 2 | | |
| 14-6) | 100µm | 0.6% UV absorber Tinuvin™ 360 (additive d)) | 2.673 |
| | 88% M. + 12% Ex. 2 | | |
| 14-7) | 100µm | 0.6% UV absorber Tinuvin™ 360 (additive d)) + 0.00065% carbon black (additive c)) | 0.117 |
| | 77.2% M. + 12% Ex. 2 + 10.8% Ex. 1 | | |
| 14-8) | 100µm | 0.36% UV absorber Tinuvin™ 1600 (additive d)) + 0.00065% carbon black (additive c)) | 0.115 |
| | 77.2% M. + 12% Ex. 3 + 10.8% Ex. 1 | | |

| | | | |
|---|---|---|---|
| M. = Makrolon™ 3108 550115; Ex. = Example | | | |

**Table 7: edge shine measurement of coextrusion films**

| | Layer i) | Additives a) to d), in relation to total film | Layer ii) | Additives a) to d) in relation to total film | Light density Cd/m² |
|---|---|---|---|---|---|
| 14-10) Comparison | 100µm | No additive | 50µm | 0.00036% carbon black (additive c)) | 1.001 |
| | 90% M. + 10% Ex. 9 | | 72% M. + 18% Ex. 1 + 10% Ex. 9 | | |
| 14-11) | 100µm | 0.4% UV absorber Tinuvin™ 360 (additive d)) | 50µm | 0.00036% carbon black (additive c)) | 0.883 |
| | 78% M. + 12% Ex. 2 + 10% Ex. 9 | | 72% M. + 18% Ex. 1 + 10% Ex. 9 | | |
| 14-12) | 95µm | 0.6% UV absorber Tinuvin™ 360 (additive d)) | 55µm | 0.6% UV absorber Tinuvin™ 360 (additive d)) + 0.00036% carbon black (additive c)) | 0.676 |
| | 78% M. + 12% Ex. 2 + 10% Ex. 9 | | 60% M. + 18% Ex. 1 +12% Ex. 2 + 10% Ex. 9 | | |
| 14-13) | 100µm | 0.6% UV absorber Tinuvin™ 360 (additive d)) + 0.005% ferrous oxide (additive b)) | 50µm | 0.6% UV absorber Tinuvin™ 360 (additive d)) + 0.00036% carbon black (additive c)) + )) + 0.005% ferrous oxide (additive b)) | 0.283 |
| | 68% M. + 12% Ex. 2 + 10% Ex. 9 + 10% Ex. 6 | | 50% M. + 18% Ex. 1 +12% Ex. 2 + 10% Ex. 9 + 10% Ex. 6 | | |
| 14-14) | 100µm | 0.6% UV absorber Tinuvin™ 360 (additive d)) + 0.005% ferrous oxide (additive b)) + 0.003% grey batch (additive a)) | 50µm | 0.6% UV absorber Tinuvin™ 360 (additive d)) + 0.00036% carbon black (additive c)) + )) + 0.005% ferrous oxide (additive b)) + 0,003% grey batch (additive a)) | 0.376 |
| | 67.5% M. + 12% Ex. 2 + 10% Ex. 9 + 10% Ex. 6 + 0.5% Ex. 5 | | 49.5% M. + 18% Ex. 1 +12% Ex. 2 + 10% Ex. 9 + 10% Ex. 6 +0.5% Ex. 5 | | |

| | | | | | |
|---|---|---|---|---|---|
| M. = Makrolon™ 3108 550115; Ex. = Example | | | | | |

The examples clearly show that the fluorescence (Table 4 and 5) was reduced by admixing iron or Tungsten metal powder or black ferrous oxide. The admixing of UV absorbers very clearly reduced the fluorescence of the films.

The edge shine (Tables 6 and 7) of the films was very clearly reduced by admixing UV absorbers as well as ferrous or Tungsten metal powder or ferrous oxide.

## Claims

1. Plastic film comprising at least one layer containing at least one thermoplastic plastic, **characterised in that** this layer contains at least one
component a)
a1) a pigment and/or a pigment mixture, preferably a2) a pigment and/or pigment mixture from the group of soluble pigments, more preferably a3) a soluble pigment mixture, the concentration and mixture ratio of which are adjusted in such a way that a light transmission of ≤ 55% is achieved for a film thickness of 500 µm over the entire spectral range between 400 nm and 650 nm, most preferably a4) a pigment mixture of Solvent Orange 60, Solvent Red 52, Solvent Green 3 and/or Solvent Blue 97 according to classification of CI, the concentration and mixture ratio of which is adjusted in such a way that a light transmission of ≤ 55% is achieved for a film thickness of 500 µm over the entire spectral range between 400 nm and 650 nm,
component b)
b1) metal powder, its alloy and/or metal oxides, wherein the metals of the group of non-ferrous metals are excluded, preferably b2) metal powder, its alloys and/or metal oxides from the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium, more preferably b3) metal powder, its alloys and/or metal oxides from the group consisting of Tungsten, iron, nickel, titanium and cobalt,
and component c)
c1) UV absorbers with an absorption effect within a range of 220 nm to 400 nm, preferably within a range of 240 nm to 390 nm, preferably comprising c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles.

2. Plastic film according to claim 1, **characterised in that** the individual components a) to c) can be present individually and/or together in the following quantities:
component a) in a quantity of 0.001 to 0.01 wt.%, preferably of 0.002 to 0.008 wt.%, more preferably of 0.0025 to 0.006 wt.%, component b) in a quantity of ≥ 0.002 wt.% to ≤ 0.03 wt.%, preferably of ≥ 0.004 wt.% to ≤ 0.02 wt.%, more preferably of ≥ 0.0045 wt.% to ≤ 0.015 wt.% and/or component c) in a quantity of 0.20 wt.% to 0.80 wt.%, preferably of 0.25 wt.% to 0.75 wt.%, more preferably of 0.30 wt.% to 0.70 wt.%, wherein all quantity information relates to the total film.

3. Plastic film according to claim 1 or 2, **characterised in that** c1) comprises a UV absorber with an absorption effect within a range of 220 nm to 400 nm, preferably within a range of 240 nm to 390 nm, preferably comprising c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles, and at least one of the components a1) a pigment and/or a pigment mixture, preferably a2) a pigment and/or pigment mixture from the group of soluble pigments, more preferably a3) a soluble pigment mixture, the concentration and mixture ratio of which is adjusted in such a way that a light transmission of ≤ 55% is achieved for a film thickness of 500 µm over the entire spectral range between 400 nm and 650 nm, most preferably a4) a pigment mixture of Solvent Orange 60, Solvent Red 52, Solvent Green 3 and/or Solvent Blue 97 according to classification of CI, the concentration and mixture ratio of which is adjusted in such a way that a light transmission of ≤ 55% is achieved for a film thickness of 500 µm over the entire spectral range between 400 nm and 650 nm, and/or b1) metal powder, its alloy and/or metal oxides, wherein the metals of the group of non-ferrous metals are excluded, preferably b2) metal powder, its alloys and/or metal oxides from the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium, more preferably b3) metal powder, its alloys and/or metal oxides from the group consisting of Tungsten, iron, nickel, titanium and cobalt.

4. Plastic film according to one of the claims 1 to 3, **characterised in that** c1) UV absorbers with an absorption effect within a range of 200 nm to 400 nm, preferably within a range of 240 nm to 390 nm, preferably comprising c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles and at least one of the components a2) a pigment and/or pigment mixture from the group of soluble pigments and or b2) metal powder, an alloy and/or metal oxides of the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium are included.

5. Plastic film according to one of the claims 1 to 3, **characterised in that** c1) comprises a UV absorber with an absorption effect within a range of 220 nm to 400 nm, preferably within a range of 240 nm to 390 nm, preferably comprising c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles, and at least one of the components a3) a soluble pigment mixture, the concentration and mixture ratio of which is adjusted in such a way that a light transmission of ≤ 55% is achieved for a film thickness of 500 µm over the entire spectral range between 400 nm and 650 nm, and/or b3) a metal powder, its alloy and/or metal oxides from the group consisting of Tungsten, iron, nickel, titanium and cobalt are included.

6. Plastic film according to one of the claims 1 to 5, **characterised in that** a laser-sensitive additive, preferably black pigments, more preferably carbon black, is included.

7. Plastic film according to claim 6, **characterised in that** carbon black in a quantity of ≥ 0.0001 wt.% to ≤ 0.015 wt.%, preferably ≥ 0.0002 wt.% to ≤ 0.0125 wt.% is included, wherein this information relates to the total quantity of the total film.

8. Plastic film according to one of the claims 1 to 7, **characterised in that** a further layer, containing at least one thermoplastic plastic, is included.

9. Plastic film according to claim 8, **characterised in that** the at least one further layer containing a thermoplastic plastic comprises a laser-sensitive additive, preferably carbon black.

10. Plastic film according to claim 8 or 9, **characterised in that** the at least one further layer, containing a thermoplastic plastic, is a laser-sensitive additive, preferably carbon black and at least one of the components comprises
component a)
a1) a pigment and/or a pigment mixture, preferably a2) a pigment and/or pigment mixture from the group of soluble pigments, more preferably a3) a soluble pigment mixture, the concentration and mixture ratio of which are adjusted in such a way that a light transmission of ≤ 55% is achieved for a film thickness of 500 µm over the entire spectral range between 400 nm and 650 nm, most preferably a4) a pigment mixture of Solvent Orange 60, Solvent Red 52, Solvent Green 3 and/or Solvent Blue 97 according to classification of CI, the concentration and mixture ratio of which is adjusted in such a way that a light transmission of ≤ 55% is achieved for a film thickness of 500 µm over the entire spectral range between 400 nm and 650 nm,
component b)
b1) metal powder, its alloy and/or metal oxides, wherein the metals of the group of non-ferrous metals are excluded, preferably b2) metal powder, its alloys and/or metal oxides from the group consisting of scandium, yttrium, zirconium, hafnium, vanadium, niobium, tantalum, chromium, Tungsten, molybdenum, manganese, technetium, rhenium, nickel, iron, cobalt, ruthenium, rhodium, palladium, osmium, iridium, zinc, cadmium, stannic, lead, platinum, titanium, more preferably b3) metal powder, its alloys and/or metal oxides from the group consisting of Tungsten, iron, nickel, titanium and cobalt,
and/or component c)
c1) UV absorbers with an absorption effect within a range of 220 nm to 400 nm, preferably within a range of 240 nm to 390 nm, preferably comprising c2) UV absorbers based on chromophores of the class of triazines, benzotriazoles, benzophenols, benzylidenmalonates and/or cyanoacrylates, more preferably c3) UV absorbers based on chromophores of the class of triazines, benzylidenmalonates and/or benzotriazoles.

11. Plastic film according to one of the claims 8 to 10, **characterised in that** the layer(s) containing at least one thermoplastic plastic is/are produced by means of coextrusion.

12. Plastic film according to at least one of claims 1 to 11, **characterised in that** the thermoplastic plastic is at least one thermoplastic plastic selected from polymerisates of ethylenically unsaturated monomers and/or polycondensation products of bifunctional reactive compounds, preferably one or more polycarbonate(s) or copolycarbonate(s) based on diphenols, poly- or copoly-acrylate(s) and poly- or copoly-methacrylate(s), polymer(s) or copolymer(s) with styrene, polyurethane(s), and polyolefin(s), poly- or copoly-condensation product(s) of terephthalic acid, poly- or copoly-condensation products of naphthalenedicarboxylic acid, poly- or copoly-condensation product(s) of at least one cycloalkyldicarboxylic acid, polysulfones or mixtures thereof, particularly preferably one or more polycarbonate(s) or copolycarbonate(s) based on diphenols, or blends containing at least one polycarbonate or copolycarbonate.

13. Plastic film according to at least one of the claims 1 to 12, **characterised in that** this film has a thickness of 20 µm to 375 µm, preferably of 30 µm to 250 µm, more preferably of 50 µm to 200 µm.

14. Layer construction comprising at least one plastic film according to claims 1 to 13.

15. Security document, preferably identification document, comprising at least one plastic film according to one of the claims 1 to 13.

## Patentansprüche

1. Kunststofffolie, umfassend mindestens eine Schicht, die mindestens einen thermoplastischen Kunststoff enthält, **dadurch gekennzeichnet, dass** diese Schicht mindestens eine
Komponente a)
a1) ein Pigment und/oder eine Pigmentmischung, vorzugsweise a2) ein Pigment und/oder eine Pigmentmischung aus der Gruppe löslicher Pigmente, weiter bevorzugt a3) eine Mischung löslicher Pigmente, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird, ganz besonders bevorzugt a4) eine Pigmentmischung von Solvent Orange 60, Solvent Red 52, Solvent Green 3 und/oder Solvent Blue 97 gemäß CI-Klassifikation, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird,
Komponente b)
b1) Metallpulver, dessen Legierung und/oder Metalloxide, wobei die Metalle der Gruppe der Nichteisenmetalle ausgeschlossen sind, vorzugsweise b2) Metallpulver, dessen Legierungen und/oder Metalloxide aus der Gruppe bestehend aus Scandium, Yttrium, Zirconium, Hafnium, Vanadium, Niob, Tantal, Chrom, Wolfram, Molybdän, Mangan, Technetium, Rhenium, Nickel, Eisen, Cobalt, Ruthenium, Rhodium, Palladium, Osmium, Iridium, Zink, Cadmium, Zinn, Blei, Platin, Titan, weiter bevorzugt b3) Metallpulver, dessen Legierungen und/oder Metalloxide aus der Gruppe bestehend aus Wolfram, Eisen, Nickel, Titan und Cobalt,
und Komponente c)
c1) UV-Absorber mit einer Absorptionswirkung in einem Bereich von 220 nm bis 400 nm, vorzugsweise in einem Bereich von 240 nm bis 390 nm, vorzugsweise umfassend c2) UV-Absorber auf Basis von Chromophoren der Klasse der Triazine, Benzotriazole, Benzophenole, Benzylidenmalonate und/oder Cyanoacrylate, weiter bevorzugt c3) UV-Absorber auf Basis von Chromophoren der Klasse der Triazine, Benzylidenmalonate und/oder Benzotriazole, enthält.

2. Kunststofffolie nach Anspruch 1, **dadurch gekennzeichnet, dass** die einzelnen Komponenten a) bis c) einzeln und/oder zusammen in den folgenden Mengen vorliegen können:
Komponente a) in einer Menge von 0,001 bis 0,01 Gew.-%, vorzugsweise von 0,002 bis 0,008 Gew.-%, weiter bevorzugt von 0,0025 bis 0,006 Gew.-%, Komponente b) in einer Menge von ≥ 0,002 Gew.-% bis ≤ 0,03 Gew.-%, vorzugsweise von ≥ 0,004 Gew.-% bis ≤ 0,02 Gew.-%, weiter bevorzugt von ≥ 0,0045 Gew.-% bis ≤ 0,015 Gew.-% und/oder Komponente c) in einer Menge von 0,20 Gew.-% bis 0,80 Gew.-%, vorzugsweise von 0,25 Gew.-% bis 0,75 Gew.-%, weiter bevorzugt von 0,30 Gew.-% bis 0,70 Gew.-%, wobei sich alle Mengenangaben auf die gesamte Folie beziehen.

3. Kunststofffolie nach Anspruch 1 oder 2, **dadurch gekennzeichnet, dass** c1) einen UV-Absorber mit einer Absorptionswirkung in einem Bereich von 220 nm bis 400 nm, vorzugsweise in einem Bereich von 240 nm bis 390 nm, vorzugsweise umfassend c2) UV-Absorber auf Basis von Chromophoren der Klasse der Triazine, Benzotriazole, Benzophenole, Benzylidenmalonate und/oder Cyanoacrylate, weiter bevorzugt c3) UV-Absorber auf Basis von Chromophoren der Klasse der Triazine, Benzylidenmalonate und/oder Benzotriazole, und mindestens eine der Komponenten a1) ein Pigment und/oder eine Pigmentmischung, vorzugsweise a2) ein Pigment und/oder eine Pigmentmischung aus der Gruppe löslicher Pigmente, weiter bevorzugt a3) eine Mischung löslicher Pigmente, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird, ganz besonders bevorzugt a4) eine Pigmentmischung von Solvent Orange 60, Solvent Red 52, Solvent Green 3 und/oder Solvent Blue 97 gemäß CI-Klassifikation, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird, und/oder b1) Metallpulver, dessen Legierung und/oder Metalloxide, wobei die Metalle der Gruppe der Nichteisenmetalle ausgeschlossen sind, vorzugsweise b2) Metallpulver, dessen Legierungen und/oder Metalloxide aus der Gruppe bestehend aus Scandium, Yttrium, Zirconium, Hafnium, Vanadium, Niob, Tantal, Chrom, Wolfram, Molybdän, Mangan, Technetium, Rhenium, Nickel, Eisen, Cobalt, Ruthenium, Rhodium, Palladium, Osmium, Iridium, Zink, Cadmium, Zinn, Blei, Platin, Titan, weiter bevorzugt b3) Metallpulver, dessen Legierungen und/oder Metalloxide aus der Gruppe bestehend aus Wolfram, Eisen, Nickel, Titan und Cobalt, umfasst.

4. Kunststofffolie nach einem der Ansprüche 1 bis 3, **dadurch gekennzeichnet, dass** c1) UV-Absorber mit einer Absorptionswirkung in einem Bereich von 200 nm bis 400 nm, vorzugsweise in einem Bereich von 240 nm bis 390 nm, vorzugsweise umfassend c2) UV-Absorber auf Basis von Chromophoren der Klasse der Triazine, Benzotriazole, Benzophenole, Benzylidenmalonate und/oder Cyanoacrylate, weiter bevorzugt c3) UV-Absorber auf Basis von Chromophoren der Klasse der Triazine, Benzylidenmalonate und/oder Benzotriazole, und mindestens eine der Komponenten a2) ein Pigment und/oder eine Pigmentmischung aus der Gruppe löslicher Pigmente und/oder b2) Metallpulver, dessen Legierungen und/oder Metalloxide aus der Gruppe bestehend aus Scandium, Yttrium, Zirconium, Hafnium, Vanadium, Niob, Tantal, Chrom, Wolfram, Molybdän, Mangan, Technetium, Rhenium, Nickel, Eisen, Cobalt, Ruthenium, Rhodium, Palladium, Osmium, Iridium, Zink, Cadmium, Zinn, Blei, Platin, Titan, enthalten sind.

5. Kunststofffolie nach einem der Ansprüche 1 bis 3, **dadurch gekennzeichnet, dass** c1) ein UV-Absorber mit einer Absorptionswirkung in einem Bereich von 220 nm bis 400 nm, vorzugsweise in einem Bereich von 240 nm bis 390 nm, vorzugsweise umfassend c2) UV-Absorber auf Basis von Chromophoren der Klasse der Triazine, Benzotriazole, Benzophenole, Benzylidenmalonate und/oder Cyanoacrylate, weiter bevorzugt c3) UV-Absorber auf Basis von Chromophoren der Klasse der Triazine, Benzylidenmalonate und/oder Benzotriazole, und mindestens eine der Komponenten a3) eine Mischung löslicher Pigmente, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird, und/oder b3) Metallpulver, dessen Legierungen und/oder Metalloxide aus der Gruppe bestehend aus Wolfram, Eisen, Nickel, Titan und Cobalt enthalten sind.

6. Kunststofffolie nach einem der Ansprüche 1 bis 5, **dadurch gekennzeichnet, dass** ein laserempfindliches Additiv, vorzugsweise Schwarzpigmente, weiter bevorzugt Ruß, enthalten ist.

7. Kunststofffolie nach Anspruch 6, **dadurch gekennzeichnet, dass** Ruß in einer Menge von ≥ 0,0001 Gew.-% bis ≤ 0,015 Gew.-%, vorzugsweise ≥ 0,0002 Gew.-% bis ≤ 0,0125 Gew.-%, enthalten ist, wobei sich diese Angabe auf die Gesamtmenge der gesamten Folie bezieht.

8. Kunststofffolie nach einem der Ansprüche 1 bis 7, **dadurch gekennzeichnet, dass** eine weitere Schicht, die mindestens einen thermoplastischen Kunststoff enthält, enthalten ist.

9. Kunststofffolie nach Anspruch 8, **dadurch gekennzeichnet, dass** die mindestens eine weitere Schicht, die einen thermoplastischen Kunststoff enthält, ein laserempfindliches Additiv, vorzugsweise Ruß, umfasst.

10. Kunststofffolie nach Anspruch 8 oder 9, **dadurch gekennzeichnet, dass** die mindestens eine weitere Schicht, die einen thermoplastischen Kunststoff enthält, ein laserempfindliches Additiv, vorzugsweise Ruß, ist und mindestens eine der Komponenten
Komponente a)
a1) ein Pigment und/oder eine Pigmentmischung, vorzugsweise a2) ein Pigment und/oder eine Pigmentmischung aus der Gruppe löslicher Pigmente, weiter bevorzugt a3) eine Mischung löslicher Pigmente, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird, ganz besonders bevorzugt a4) eine Pigmentmischung von Solvent Orange 60, Solvent Red 52, Solvent Green 3 und/oder Solvent Blue 97 gemäß CI-Klassifikation, deren Konzentration und Mischungsverhältnis so eingestellt sind, dass für eine Filmdicke von 500 µm über den gesamten Spektralbereich zwischen 400 nm und 650 nm eine Lichttransmission ≤ 55 % erreicht wird,
Komponente b)
b1) Metallpulver, dessen Legierung und/oder Metalloxide, wobei die Metalle der Gruppe der Nichteisenmetalle ausgeschlossen sind, vorzugsweise b2) Metallpulver, dessen Legierungen und/oder Metalloxide aus der Gruppe bestehend aus Scandium, Yttrium, Zirconium, Hafnium, Vanadium, Niob, Tantal, Chrom, Wolfram, Molybdän, Mangan, Technetium, Rhenium, Nickel, Eisen, Cobalt, Ruthenium, Rhodium, Palladium, Osmium, Iridium, Zink, Cadmium, Zinn, Blei, Platin, Titan, weiter bevorzugt b3) Metallpulver, dessen Legierungen und/oder Metalloxide aus der Gruppe bestehend aus Wolfram, Eisen, Nickel, Titan und Cobalt,
und/oder Komponente c)
c1) UV-Absorber mit einer Absorptionswirkung in einem Bereich von 220 nm bis 400 nm, vorzugsweise in einem Bereich von 240 nm bis 390 nm, vorzugsweise umfassend c2) UV-Absorber auf Basis von Chromophoren der Klasse der Triazine, Benzotriazole, Benzophenole, Benzylidenmalonate und/oder Cyanoacrylate, weiter bevorzugt c3) UV-Absorber auf Basis von Chromophoren der Klasse der Triazine, Benzylidenmalonate und/oder Benzotriazole, umfasst.

11. Kunststofffolie nach einem der Ansprüche 8 bis 10, **dadurch gekennzeichnet, dass** die Schicht/die Schichten, die mindestens einen thermoplastischen Kunststoff enthält/enthalten, mittels Coextrusion hergestellt wird/werden.

12. Kunststofffolie nach mindestens einem der Ansprüche 1 bis 11, **dadurch gekennzeichnet, dass** es sich bei dem thermoplastischen Kunststoff um mindestens einen thermoplastischen Kunststoff handelt, der aus Polymerisaten von ethylenisch ungesättigten Monomeren und/oder Polykondensationsprodukten von bifunktionellen reaktiven Verbindungen, vorzugsweise einem oder mehreren Polycarbonaten oder Copolycarbonaten auf Basis von Diphenolen, Poly- oder Copolyacrylaten und Poly- oder Copolymethacrylaten, Polymeren oder Copolymeren mit Styrol, Polyurethanen und Polyolefinen, Poly- oder Copolykondensationsprodukten von Terephthalsäure, Poly- oder Copolykondensationsprodukten von Naphthalindicarbonsäure, Poly- oder Copolykondensationsprodukten von Cycloalkyldicarbonsäure, Polysulfonen oder Mischungen davon, besonders bevorzugt einem oder mehreren Polycarbonaten oder Copolycarbonaten auf Basis von Diphenolen oder Mischungen, die mindestens ein Polycarbonat oder Copolycarbonate enthalten, ausgewählt ist.

13. Kunststofffolie nach mindestens einem der Ansprüche 1 bis 12, **dadurch gekennzeichnet, dass** diese Folie eine Dicke von 20 µm bis 375 µm, vorzugsweise von 30 µm bis 250 µm, weiter bevorzugt von 50 µm bis 200 µm, aufweist.

14. Schichtaufbau, umfassend mindestens eine Kunststofffolie nach den Ansprüchen 1 bis 13.

15. Sicherheitsdokument, vorzugsweise Identifikationsdokument, umfassend mindestens eine Kunststofffolie nach einem der Ansprüche 1 bis 13.

## Revendications

1. Film plastique comprenant au moins une couche contenant au moins un plastique thermoplastique, **caractérisé en ce que** cette couche contient au moins un
constituant a)
a1) un pigment et/ou un mélange de pigments, préférablement a2) un pigment et/ou un mélange de pigments du groupe des pigments solubles, plus préférablement a3) un mélange de pigments solubles, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm, idéalement a4) un mélange de pigments constitué du Solvent Orange 60, du Solvent Red 52, du Solvent Green 3 et/ou du Solvent Blue 97 selon la classification CI, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm,
constituant b)
b1) une poudre métallique, son alliage et/ou des oxydes métalliques, à l'exclusion des métaux du groupe des métaux non ferreux, préférablement b2) une poudre métallique, ses alliages et/ou des oxydes métalliques du groupe constitué du scandium, de l'yttrium, du zirconium, du hafnium, du vanadium, du niobium, du tantale, du chrome, du tungstène, du molybdène, du manganèse, du technétium, du rhénium, du nickel, du fer, du cobalt, du ruthénium, du rhodium, du palladium, de l'osmium, de l'iridium, du zinc, du cadmium, d'étain, du plomb, du platine, du titane, plus préférablement b3) une poudre métallique, ses alliages et/ou des oxydes métalliques du groupe constitué du tungstène, du fer, du nickel, du titane et du cobalt,
et constituant c)
c1) des absorbeurs d'UV ayant un effet d'absorption compris dans une plage de 220 nm à 400 nm, préférablement dans une plage de 240 nm à 390 nm, comprenant préférablement c2) des absorbeurs d'UV à base de chromophores de la classe des triazines, des benzotriazoles, des benzophénols, des benzylidènemalonates et/ou des cyanoacrylates, plus préférablement c3) des absorbeurs d'UV à base de chromophores de la classe des triazines, des benzylidènemalonates et/ou des benzotriazoles.

2. Film plastique selon la revendication 1, **caractérisé en ce que** les constituants individuels a) à c) peuvent être présents individuellement et/ou ensemble dans les quantités suivantes :
constituant a) dans une quantité de 0,001 à 0,01 % en poids, préférablement de 0,002 à 0,008 % en poids, plus préférablement de 0,0025 à 0,006 % en poids, constituant b) dans une quantité de > 0,002 % en poids à < 0,03 % en poids, préférablement de ≥ 0,004 % en poids à < 0,02 % en poids, plus préférablement de > 0,0045 % en poids à < 0,015 % en poids, et/ou constituant c) dans une quantité de 0,20 % en poids à 0,80 % en poids, préférablement de 0,25 % en poids à 0,75 % en poids, plus préférablement de 0,30 % en poids à 0,70 % en poids, toutes les informations quantitatives se rapportant au film total.

3. Film plastique selon la revendication 1 ou 2, **caractérisé en ce que** c1) comprend un absorbeur d'UV ayant un effet d'absorption compris dans une plage de 220 nm à 400 nm, préférablement dans une plage de 240 nm à 390 nm, comprenant préférablement c2) des absorbeurs d'UV à base de chromophores de la classe des triazines, des benzotriazoles, des benzophénols, des benzylidènemalonates et/ou des cyanoacrylates, plus préférablement c3) des absorbeurs d'UV à base de chromophores de la classe des triazines, des benzylidènemalonates et/ou des benzotriazoles, et au moins l'un des constituants a1) un pigment et/ou un mélange de pigments, préférablement a2) un pigment et/ou un mélange de pigments du groupe des pigments solubles, plus préférablement a3) un mélange de pigments solubles, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm, idéalement a4) un mélange de pigments constitué du Solvent Orange 60, du Solvent Red 52, du Solvent Green 3 et/ou du Solvent Blue 97 selon la classification CI, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm, et/ou b1) une poudre métallique, son alliage et/ou des oxydes métalliques, à l'exclusion des métaux du groupe des métaux non ferreux, préférablement b2) une poudre métallique, ses alliages et/ou des oxydes métalliques du groupe constitué du scandium, de l'yttrium, du zirconium, du hafnium, du vanadium, du niobium, du tantale, du chrome, du tungstène, du molybdène, du manganèse, du technétium, du rhénium, du nickel, du fer, du cobalt, du ruthénium, du rhodium, du palladium, de l'osmium, de l'iridium, du zinc, du cadmium, d'étain, du plomb, du platine, du titane, plus préférablement b3) une poudre métallique, ses alliages et/ou des oxydes métalliques du groupe constitué du tungstène, du fer, du nickel, du titane et du cobalt.

4. Film plastique selon l'une des revendications 1 à 3, **caractérisé en ce que** c1) des absorbeurs d'UV ayant un effet d'absorption compris dans une plage de 200 nm à 400 nm, préférablement dans une plage de 240 nm à 390 nm, comprenant préférablement c2) des absorbeurs d'UV à base de chromophores de la classe des triazines, des benzotriazoles, des benzophénols, des benzylidènemalonates et/ou des cyanoacrylates, plus préférablement c3) des absorbeurs d'UV à base de chromophores de la classe des triazines, des benzylidènemalonates et/ou des benzotriazoles et au moins l'un des constituants a2) un pigment et/ou un mélange de pigments du groupe des pigments solubles, et/ou b2) une poudre métallique, un alliage et/ou des oxydes métalliques du groupe constitué du scandium, de l'yttrium, du zirconium, du hafnium, du vanadium, du niobium, du tantale, du chrome, du tungstène, du molybdène, du manganèse, du technétium, du rhénium, du nickel, du fer, du cobalt, du ruthénium, du rhodium, du palladium, de l'osmium, de l'iridium, du zinc, du cadmium, d'étain, du plomb, du platine, et du titane, sont inclus.

5. Film plastique selon l'une des revendications 1 à 3, **caractérisé en ce que** c1) comprend un absorbeur d'UV ayant un effet d'absorption compris dans une plage de 220 nm à 400 nm, préférablement dans une plage de 240 nm à 390 nm, comprenant préférablement c2) des absorbeurs d'UV à base de chromophores de la classe des triazines, des benzotriazoles, des benzophénols, des benzylidènemalonates et/ou des cyanoacrylates, plus préférablement c3) des absorbeurs d'UV à base de chromophores de la classe des triazines, des benzylidènemalonates et/ou des benzotriazoles, et au moins l'un des constituants a3) un mélange de pigments solubles, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm, et/ou b3) une poudre métallique, son alliage et/ou des oxydes métalliques du groupe constitué du tungstène, du fer, du nickel, du titane et du cobalt, sont inclus.

6. Film plastique selon l'une des revendications 1 à 5, **caractérisé en ce qu'**un additif sensible au laser, préférablement des pigments noirs, plus préférablement du noir de carbone, est inclus.

7. Film plastique selon la revendication 6, **caractérisé en ce que** du noir de carbone dans une quantité de > 0,0001 % en poids à < 0,015 % en poids, préférablement de > 0,0002 % en poids à < 0,0125 % en poids est inclus, cette information se rapportant à la quantité totale du film total.

8. Film plastique selon l'une des revendications 1 à 7, **caractérisé en ce qu'**une couche supplémentaire, contenant au moins un plastique thermoplastique, est incluse.

9. Film plastique selon la revendication 8, **caractérisé en ce que** l'au moins une couche supplémentaire contenant un plastique thermoplastique comprend un additif sensible au laser, préférablement du noir de carbone.

10. Film plastique selon la revendication 8 ou 9, **caractérisé en ce que** l'au moins une couche supplémentaire, contenant un plastique thermoplastique, est un additif sensible au laser, préférablement du noir de carbone, et au moins l'un des constituants comprend
constituant a)
a1) un pigment et/ou un mélange de pigments, préférablement a2) un pigment et/ou un mélange de pigments du groupe des pigments solubles, plus préférablement a3) un mélange de pigments solubles, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm, idéalement a4) un mélange de pigments constitué du Solvent Orange 60, du Solvent Red 52, du Solvent Green 3 et/ou du Solvent Blue 97 selon la classification CI, dont la concentration et les proportions sont ajustées de manière à ce qu'une transmission de la lumière de < 55 % soit obtenue pour une épaisseur de film de 500 µm dans toute la plage spectrale comprise entre 400 nm et 650 nm,
constituant b)
b1) une poudre métallique, son alliage et/ou des oxydes métalliques, à l'exclusion des métaux du groupe des métaux non ferreux, préférablement b2) une poudre métallique, ses alliages et/ou des oxydes métalliques du groupe constitué du scandium, de l'yttrium, du zirconium, du hafnium, du vanadium, du niobium, du tantale, du chrome, du tungstène, du molybdène, du manganèse, du technétium, du rhénium, du nickel, du fer, du cobalt, du ruthénium, du rhodium, du palladium, de l'osmium, de l'iridium, du zinc, du cadmium, d'étain, du plomb, du platine, du titane, plus préférablement b3) une poudre métallique, ses alliages et/ou des oxydes métalliques du groupe constitué du tungstène, du fer, du nickel, du titane et du cobalt,
et/ou constituant c)
c1) des absorbeurs d'UV ayant un effet d'absorption compris dans une plage de 220 nm à 400 nm, préférablement dans une plage de 240 nm à 390 nm, comprenant préférablement c2) des absorbeurs d'UV à base de chromophores de la classe des triazines, des benzotriazoles, des benzophénols, des benzylidènemalonates et/ou des cyanoacrylates, plus préférablement c3) des absorbeurs d'UV à base de chromophores de la classe des triazines, des benzylidènemalonates et/ou des benzotriazoles.

11. Film plastique selon l'une des revendications 8 à 10, **caractérisé en ce que** la/les couche(s) contenant au moins un plastique thermoplastique est/sont produite(s) par coextrusion.

12. Film plastique selon au moins l'une des revendications 1 à 11, **caractérisé en ce que** le plastique thermoplastique est au moins un plastique thermoplastique sélectionné parmi des polymérisats de monomères à insaturation éthylénique et/ou des produits de polycondensation de composés réactifs bifonctionnels, préférablement un ou plusieurs polycarbonates ou un ou plusieurs copolycarbonates à base de diphénols, un ou plusieurs poly- ou copoly-acrylates et un ou plusieurs poly- ou copoly-méthacrylates, un ou plusieurs polymères ou un ou plusieurs copolymères avec du styrène, un ou plusieurs polyuréthanes, et une ou plusieurs polyoléfines, un ou plusieurs produits de poly- ou copoly-condensation d'acide téréphtalique, un ou plusieurs produits de poly- ou copoly-condensation d'acide naphtalènedicarboxylique, un ou plusieurs produits de poly- ou copoly-condensation d'au moins un acide cycloalkyldicarboxylique, des polysulfones ou des mélanges de ceux-ci, particulièrement préférablement un ou plusieurs polycarbonates ou un ou plusieurs copolycarbonates à base de diphénols, ou des mélanges contenant au moins un polycarbonate ou copolycarbonate.

13. Film plastique selon au moins l'une des revendications 1 à 12, **caractérisé en ce que** ce film a une épaisseur de 20 µm à 375 µm, préférablement de 30 µm à 250 µm, plus préférablement de 50 µm à 200 µm.

14. Construction en couches comprenant au moins un film plastique selon les revendications 1 à 13.

15. Document de sécurité, préférablement un document d'identification, comprenant au moins un film plastique selon l'une des revendications 1 à 13.
